# EUROPEAN PATENT APPLICATION

(11) **EP 4 831 712 A1**
(43) Date of publication of application: **28.10.2026**
(21) Application number: 24921466.9
(22) Date of filing: 25.09.2024
(51) Int. Cl.: G02B 9/64, G02B 13/00

(54) **OPTICAL LENS, CAMERA MODULE AND TERMINAL**

(30) Priority: 31.01.2024 CN 202410143365
(71) Applicant: Huawei Technologies Co., Ltd., Shenzhen, Guangdong 518129 (CN)
(72) Inventor: ZHANG, Kaiyuan, Shenzhen, Guangdong 518129 (CN); WANG, Xiaofang, Shenzhen, Guangdong 518129 (CN)
(74) Representative: Huawei European IPR
(86) International application number: PCT/CN2024/121182
(87) International publication number: WO 2025/161442

(57) **Abstract**

An optical lens (10), a camera module (100), and a terminal (1000) are provided. The optical lens (10) includes at least seven lens elements, each of the lens elements includes an object side surface facing an object side and an image side surface facing an image side, and the at least seven lens elements include a first lens element (L1), a second lens element (L2), a third lens element (L3), a fourth lens element (L4), a fifth lens element (L5), a sixth lens element (L6), and a seventh lens element (L7) sequentially arranged in a direction from the object side to the image side. The first lens element (L1) has a positive focal power, a refractive index of the first lens element (L1) is greater than or equal to 1.6, a sagitta at an edge of the image side surface of the third lens element (L3) is greater than 0.3 mm, and a sagitta at an edge of the object side surface of the third lens element (L3) is greater than 0. The optical lens (10) has a good light converging capability, so that the optical lens (10) can have a shorter total track length while ensuring that the optical lens (10) has a good imaging capability, thereby facilitating miniaturization of the optical lens (10). When the optical lens (10) is disposed in the terminal (1000), thinning of the terminal is facilitated.

## Description

This application claims priority to Chinese Patent Application No. 202410143365.3, filed with the China National Intellectual Property Administration on January 31, 2024 and entitled "OPTICAL LENS, CAMERA MODULE, AND TERMINAL", which is incorporated herein by reference in its entirety.

### TECHNICAL FIELD

This application relates to the field of lens technologies, and in particular, to an optical lens, a camera module, and a terminal.

### BACKGROUND

Portable terminals are trending toward thinner designs, and consumers have increasingly high requirements for imaging performance of portable terminals. To meet imaging requirements, a thickness of a camera module is continuously increasing. A size of the camera module often becomes a main factor restricting thinning of a mobile terminal. In particular, when the camera module is equipped with a large aperture, a large amount of light enters an optical lens. This requires a longer optical path, and a larger size of the camera module. Therefore, how to balance imaging quality, a thickness, and a size of an optical lens and provide an optical lens that supports a large aperture and that has a shorter overall length becomes a problem to be resolved in the industry, and is also a key challenge in a thinning development process of a portable terminal.

### SUMMARY

Embodiments of this application provide an optical lens, a camera module, and a terminal, to obtain the optical lens that has high imaging performance and a shorter optical body length, thereby facilitating thinning development of the terminal.

According to a first aspect, an embodiment of this application provides an optical lens. The optical lens includes at least seven lens elements, each of the lens elements includes an object side surface facing an object side and an image side surface facing an image side, and the at least seven lens elements include a first lens element, a second lens element, a third lens element, a fourth lens element, a fifth lens element, a sixth lens element, and a seventh lens element sequentially arranged in a direction from the object side to the image side. The first lens element has a positive focal power, a refractive index of the first lens element is greater than or equal to 1.6, a sagitta at an edge of the image side surface of the third lens element is greater than 0.3 mm, and a sagitta at an edge of the object side surface of the third lens element is greater than 0.

It may be understood that a sagitta of a lens element surface represents a distance between a projected point of any point on the lens element surface onto an optical axis and a center point of the lens element surface. When the projected point of the point is on an image side of the lens element surface, a sagitta of the point is a positive number. When the projected point of the point is on an object side of the lens element surface, a sagitta of the point is a negative number.

The first lens element with the refractive index greater than or equal to 1.6 is used, so that the first lens element that has good light converging performance and a small thickness can be obtained. In addition, the third lens element that has the foregoing features can further converge light and adjust an aberration of the light. The optical lens in this embodiment has a good light converging capability, so that the optical lens has a shorter optical body length while ensuring that the optical lens has a good imaging capability, thereby facilitating disposing of the optical lens. Especially, when the optical lens is disposed in a terminal, thinning of the terminal is facilitated.

In some possible implementations, the first lens element is made of a glass material. The glass material offers a wider range of refractive indexes for selection, so that a requirement of the first lens element for the refractive index can be met.

In some possible implementations, remaining lens elements other than the first lens element are all made of a resin material. The resin material features ease of molding and processing, and can meet a refraction requirement of the lens element while offering good moldability, thereby facilitating manufacturing of the optical lens.

In some possible implementations, a back focal length BFL of the optical lens and a total track length TTL of the optical lens satisfy the following relationship: 4≤TTL/BFL≤7. The optical lens that satisfies the relationship has a longer back focal length BFL and a shorter optical body length TTL 1, so that the optical lens has better imaging performance when a larger aperture is used.

In the foregoing implementations, the optical lens is further allowed to be used in a camera module featuring a pop-up design, and a longer back focal length BFL can reserve space for moving the optical lens. When the camera module is allowed to be switched to a non-working state, the optical lens can move toward an interior of a housing for at least a part of a distance, to reduce a gap between the optical lens and a photosensitive element, thereby lowering a height of the optical lens protruding from the terminal, and facilitating a thinning design of the terminal in which the camera module is used.

In some possible implementations, a ratio of a focal length f1 of the first lens element in the optical lens to a system focal length f of the optical lens satisfies f1/f≤1. The first lens element whose focal length satisfies the foregoing relationship can perform a good light converging function, and ensure that the optical lens can better converge light.

In some possible implementations, a ratio of a focal length f2 of the second lens element to a system focal length f of the optical lens satisfies -2≤f2/f≤0, and the second lens element that satisfies the foregoing relationship can effectively control a propagation direction of light.

In some possible implementations, a paraxial region of the sixth lens element has a positive focal power. The sixth lens element has a function of converging light in the paraxial region.

In some possible implementations, a curvature radius of a center of an image side surface of the sixth lens element is less than 0, that is, a shape of the center of the image side surface of the sixth lens element is convex, and the sixth lens element can implement the good light converging function in the paraxial region.

In some possible implementations, a paraxial region of the seventh lens element has a negative focal power. In this implementation, the paraxial region of the seventh lens element has a light diverging function, and adaptively adjusting a direction of the light in the paraxial region of the seventh lens element can improve imaging quality.

In some possible implementations, a curvature radius of a center of the object side surface of the seventh lens element is less than 0, and the center of the object side surface that is of the seventh lens element and whose curvature radius satisfies the foregoing relationship is a concave surface, so that a light direction in the paraxial region can be effectively controlled. In conjunction with a property that the seventh lens element has the negative focal power, an emergent position of the light can be adjusted while diverging the light, thereby allowing the light to achieve good convergent imaging on an imaging plane.

In some possible implementations, the system focal length f of the optical lens and an entrance pupil diameter EPD of the optical lens may meet the relational expression f/EPD≤1.55. It may be understood that an f-number of the optical lens is equal to a ratio of the system focal length f of the optical lens to the entrance pupil diameter EPD of the optical lens, and the f-number of the optical lens that meets the foregoing relational expression is less than 1.55. The optical lens has a large-aperture photography mode, so that a subject can be better highlighted and a picture can be simplified.

In some possible implementations, the optical lens may meet the relational expression f/(EPDmax-EPDmin)≥1.6. EPDmax is a maximum entrance pupil diameter of the optical lens, and EPDmin is a minimum entrance pupil diameter of the optical lens. The optical lens that meets the foregoing relational expression has a variable aperture. The optical lens can provide different depth of field ranges for different scenes in the foregoing adjustable aperture range, and meet multi-scene shooting requirements.

In some possible implementations, a maximum semi field of view Semi-FOV (Semi Field of View) of the optical lens is less than or equal to 43°. When serving as a main camera lens, the optical lens in this implementation exhibits a reduced optical distortion, and can achieve high imaging performance.

In some possible implementations, the system focal length f of the optical lens and the maximum semi field of view Semi-FOV of the optical lens meet a relational expression f×tan(Semi-FOV)≥7.5 mm. The optical lens in this design can be used in a photosensitive element having a large target surface, so that a camera module equipped with the optical lens has a large target surface, thereby helping to improve imaging brightness and resolution.

In some possible implementations, the system focal length f of the optical lens and the maximum semi field of view Semi-FOV of the optical lens meet a relational expression f×tan(Semi-FOV)≥8 mm.

The following uses an optical lens including seven lens elements as an example to describe several specific structural forms of the optical lens. For example, in a direction from an object side to an image side, the seven lens elements of the optical lens are respectively a first lens element, a second lens element, a third lens element, a fourth lens element, a fifth lens element, a sixth lens element, and a seventh lens element.

The first lens element has a positive focal power, the second lens element has a negative focal power, the third lens element has a positive focal power, the fourth lens element has a positive focal power, the fifth lens element has a negative focal power, the sixth lens element has a positive focal power, and the seventh lens element has a negative focal power. A sagitta sag at an edge of an image side surface of the third lens element meets a relational expression sag=0.48 mm; a system focal length f and an entrance pupil diameter EPD meet a relational expression f/EPD=1.51; a curvature radius R12 of an image side surface of the sixth lens element meets a relational expression R12=-3.03; the system focal length f, a maximum entrance pupil diameter EPDmax, and a minimum entrance pupil diameter EPDmin meet a relational expression f/(EPDmax-EPDmin)=2.44; the system focal length f and a maximum semi field of view Semi-FOV meet a relational expression f×tan(Semi-FOV)=8.235, the maximum semi field of view Semi-FOV meets a relational expression Semi-FOV=41.26°; a focal length f1 of the first lens element L1 and the system focal length f meet a relational expression f1/f=0.825; and a focal length f2 of the second lens element L2 and the system focal length f meet a relational expression f2/f=-1.452.

Alternatively, the first lens element has a positive focal power, the second lens element has a negative focal power, the third lens element has a negative focal power, the fourth lens element has a positive focal power, the fifth lens element has a negative focal power, the sixth lens element has a positive focal power, and the seventh lens element has a negative focal power. A sagitta sag at an edge of an image side surface of the third lens element meets a relational expression sag=0.46 mm; a system focal length f and an entrance pupil diameter EPD meet a relational expression f/EPD=1.52; a curvature radius R12 of an image side surface of the sixth lens element meets a relational expression R12=-2.93; the system focal length f, a maximum entrance pupil diameter EPDmax, and a minimum entrance pupil diameter EPDmin meet a relational expression f/(EPDmax-EPDmin)=2.46; the system focal length f and a maximum semi field of view Semi-FOV meet a relational expression f×tan(Semi-FOV)=8.22, the maximum semi field of view Semi-FOV meets a relational expression Semi-FOV=41.2°; a focal length f1 of the first lens element and the system focal length f meet a relational expression f1/f=0.825; and a focal length f2 of the second lens element and the system focal length f meet a relational expression f2/f=-1.461.

Alternatively, the first lens element has a positive focal power, the second lens element has a negative focal power, the third lens element has a positive focal power, the fourth lens element has a positive focal power, the fifth lens element has a negative focal power, the sixth lens element has a positive focal power, and the seventh lens element has a negative focal power. A sagitta sag at an edge of an image side surface of the third lens element meets a relational expression sag=0.412 mm; a system focal length f and an entrance pupil diameter EPD meet a relational expression f/EPD=1.48; a curvature radius R12 of an image side surface of the sixth lens element meets a relational expression R12=-3.31; the system focal length f, a maximum entrance pupil diameter EPDmax, and a minimum entrance pupil diameter EPDmin meet a relational expression f/(EPDmax-EPDmin)=2.35; the system focal length f and a maximum semi field of view Semi-FOV meet a relational expression f×tan(Semi-FOV)=8.08; the maximum semi field of view Semi-FOV meets a relational expression Semi-FOV=41.17°; a focal length f1 of the first lens element and the system focal length f meet a relational expression f1/f=0.8345; and a focal length f2 of the second lens element and the system focal length f meet a relational expression f2/f=-1.3464.

Alternatively, the first lens element has a positive focal power, the second lens element has a negative focal power, the third lens element has a negative focal power, the fourth lens element has a positive focal power, the fifth lens element has a negative focal power, the sixth lens element has a positive focal power, and the seventh lens element has a negative focal power. A sagitta sag at an edge of an image side surface of the third lens element meets a relational expression sag=0.462 mm; a system focal length f and an entrance pupil diameter EPD meet a relational expression f/EPD=1.485; a curvature radius R12 of an image side surface of the sixth lens element meets a relational expression R12=-2.945; the system focal length f, a maximum entrance pupil diameter EPDmax, and a minimum entrance pupil diameter EPDmin meet a relational expression f/(EPDmax-EPDmin)=2.46; the system focal length f and a maximum semi field of view Semi-FOV meet a relational expression f×tan(Semi-FOV)=8.22; the maximum semi field of view Semi-FOV meets a relational expression Semi-FOV=41.2°; a focal length f₁ of the first lens element and the system focal length f meet a relational expression f₁/f=0.825; and a focal length f₂ of the second lens element and the system focal length f meet a relational expression f₂/f=-1.461.

Alternatively, the first lens element has a positive focal power, the second lens element has a negative focal power, the third lens element has a positive focal power, the fourth lens element has a positive focal power, the fifth lens element has a negative focal power, the sixth lens element has a positive focal power, and the seventh lens element has a negative focal power. A sagitta sag at an edge of an image side surface of the third lens element meets a relational expression sag=0.3248 mm; a system focal length f and an entrance pupil diameter EPD meet a relational expression f/EPD=1.38; a curvature radius R12 of an image side surface of the sixth lens element meets a relational expression R12=-3.315; the system focal length f, a maximum entrance pupil diameter EPDmax, and a minimum entrance pupil diameter EPDmin meet a relational expression f/(EPDmax-EPDmin)=2.285; the system focal length f and a maximum semi field of view Semi-FOV meet a relational expression f×tan(Semi-FOV)=7.806; the maximum semi field of view Semi-FOV meets a relational expression Semi-FOV=40.56°; a focal length f1 of the first lens element and the system focal length f meet a relational expression f1/f=0.837; and a focal length f2 of the second lens element and the system focal length f meet a relational expression f2/f=-1.468.

According to a second aspect, this application further provides a camera module, including a photosensitive element and the optical lens in any one of the foregoing possible implementations, where the photosensitive element is on an image side of the optical lens. The photosensitive element may be configured to convert an optical signal transmitted by the optical lens into an image signal, and the camera module has a better shooting effect.

In a possible implementation, the camera module has a first state and a second state. In the first state, a distance between the seventh lens element of the optical lens and the photosensitive element is a first distance. In the second state, a distance between the seventh lens element of the optical lens and the photosensitive element is a second distance. The second distance is greater than the first distance.

The camera module in the foregoing implementation has the first state in which the camera module is close to the photosensitive element and the second state in which the camera module is far away from the photosensitive element. In this way, in the first state, the camera module can be arranged close to the photosensitive element to have a smaller height, thereby helping to dispose the camera module and facilitating a thinning design of the terminal in which the camera module is disposed. In addition, in the second state, the camera module has a longer back focal length, so that a captured image has better image quality, and a shooting effect of a system is improved.

According to a third aspect, this application further provides a terminal. The terminal includes an image processor and the camera module in any one of the foregoing possible implementations. The image processor is communicatively connected to the camera module, the camera module is configured to obtain image data and input the image data into the image processor, and the image processor is configured to process the output image data. The terminal has a good shooting effect and is easy to implement a thinning design.

### BRIEF DESCRIPTION OF DRAWINGS

To describe technical solutions in embodiments of the present invention more clearly, the following briefly describes the accompanying drawings for describing embodiments. It is clear that the accompanying drawings in the following descriptions show merely some embodiments of the present invention, and a person of ordinary skill in the art may derive other drawings from these accompanying drawings without creative efforts.
FIG. 1 is a diagram of a structure of a terminal according to an example implementation of this application;
FIG. 2 is a diagram of a structure of a terminal according to another example implementation of this application;
FIG. 3 is a diagram of a structure of a camera module, an analog-to-digital converter, an image processor, and a memory according to an example implementation of this application;
FIG. 4 is a diagram of a structure of an optical lens according to a first embodiment of this application;
FIG. 5 is a diagram of a structure of an optical lens according to a first embodiment of this application, where lines are used as an example to show a light propagation path in the optical lens;
FIG. 6 is an axial chromatic aberration curve diagram of an optical lens according to a first embodiment of this application;
FIG. 7 is an optical distortion curve diagram of an optical lens according to a first embodiment of this application;
FIG. 8 is a diagram of a structure of an optical lens according to a second embodiment of this application;
FIG. 9 is a diagram of a structure of an optical lens according to a second embodiment of this application, where lines are used as an example to show a light propagation path in the optical lens;
FIG. 10 is an axial chromatic aberration curve diagram of an optical lens according to a second embodiment of this application;
FIG. 11 is an optical distortion curve diagram of an optical lens according to a second embodiment of this application;
FIG. 12 is a diagram of a structure of an optical lens according to a third embodiment of this application;
FIG. 13 is a diagram of a structure of an optical lens according to a third embodiment of this application, where lines are used as an example to show a light propagation path in the optical lens;
FIG. 14 is an axial chromatic aberration curve diagram of an optical lens according to a third embodiment of this application;
FIG. 15 is an optical distortion curve diagram of an optical lens according to a third embodiment of this application;
FIG. 16 is a diagram of a structure of an optical lens according to a fourth embodiment of this application;
FIG. 17 is a diagram of a structure of an optical lens according to a fourth embodiment of this application, where lines are used as an example to show a light propagation path in the optical lens;
FIG. 18 is an axial chromatic aberration curve diagram of an optical lens according to a fourth embodiment of this application;
FIG. 19 is an optical distortion curve diagram of an optical lens according to a fourth embodiment of this application;
FIG. 20 is a diagram of a structure of an optical lens according to a fifth embodiment of this application;
FIG. 21 is a diagram of a structure of an optical lens according to a fifth embodiment of this application, where lines are used as an example to show a light propagation path in the optical lens;
FIG. 22 is an axial chromatic aberration curve diagram of an optical lens according to a fifth embodiment of this application; and
FIG. 23 is an optical distortion curve diagram of an optical lens according to a fifth embodiment of this application.

### DESCRIPTION OF EMBODIMENTS

To make the objectives, technical solutions, and advantages of the present invention clearer, the following further describes implementations of the present invention in detail with reference to the accompanying drawings.

First, terms that may be related to embodiments of the present invention are uniformly described.

Optical axis: is light that perpendicularly passes through an optical center of a lens element. When light parallel to the optical axis is incident on a convex lens element, in an ideal convex lens element, all light should be converged at a point behind a lens element. The point at which all the light is converged is a focal point.

Imaging plane: is a plane on which an image of a photographed object that is imaged by using an optical system is located. A photosensitive element may be disposed on the imaging plane, and the photosensitive element may be configured to record an image of the photographed object after imaging.

Object side surface and image side surface: With a lens element as a boundary, a side on which a photographed object is located is an object side, and a surface that is of the lens element and that faces the object side may be referred to as an object side surface. With the lens element as a boundary, the other side opposite to the object side is an image side, and a surface that is of the lens element and that faces the image side may be referred to as an image side surface.

Focal power, positive focal power, and negative focal power: The focal power indicates that a lens element or a local region of a lens element has a capability of diverging light or converging light. The positive focal power may also be referred to as a positive refractive power, and indicates that a lens element or a local region of a lens element has a positive focal length and a capability of converging light. The negative focal power may also be referred to as a negative refractive power, and indicates that a lens element or a local region of a lens element has a negative focal length and a capability of diverging light.

Focal length (focal length): also referred to as a focal length, is a measurement method for measuring a converging effect or diverging effect of light, and indicates a distance between an optical center of a lens element or a lens and an imaging plane when an infinitely distant object forms a clear image on the imaging plane through the lens element or the lens. A focal length of the lens is a distance between the optical center of the lens and the imaging plane. For a prime lens, a position of an optical center of the lens is fixed. For a zoom lens, a change of an optical center of the lens causes a change of a focal length of the lens.

Back focal length (back focal length, BFL): also referred to as a back focal length, is a minimum distance, on an optical axis, between a lens element that has a focal power and that is closest to an imaging plane in an optical system and the imaging plane.

Total track length (total track length, TTL): is a maximum distance, on an optical axis, between a lens element closest to a photographed object in an optical system and an imaging plane.

Optical body length: is a maximum distance, on an optical axis, between a lens element closest to a photographed object in an optical system and a lens element closest to an imaging plane in the optical system. The optical body length is a main factor that forms a height of an optical lens in an optical axis direction.

Aperture: is an apparatus configured to control an amount of light that enters a camera body through a lens, and is usually disposed in the lens. A value of the aperture is usually represented by an f-number (F/number). The f-number is equal to a ratio of a focal length of an optical system to an entrance pupil diameter. The f-number can be expressed as F/1.2, F/1.8, F/2.5, F/3.0, F/4.8, or F/5.0. When the f-number is smaller, an amount of light entering in a same unit time is larger. A variable aperture is an aperture whose f-number can be adjusted.

Entrance pupil diameter (entrance pupil diameter, EPD): is a diameter of a maximum light beam that is vertically incident on a lens from an object side in a direction parallel to an optical axis. The entrance pupil diameter is equal to a ratio of a focal length of an optical system to an f-number. It may be understood that, in an optical system using a variable aperture, the entrance pupil diameter varies with an f-number of the variable aperture. When the f-number of the variable aperture is a minimum f-number in a variable range, an entrance pupil diameter of the optical system is a maximum entrance pupil diameter. When the f-number of the variable aperture is a maximum f-number in a variable range, an entrance pupil diameter of the optical system is a minimum entrance pupil diameter.

Field of view (field of view, FOV): is an included angle formed by two edges of a maximum range of a lens through which an object image of a measured target can pass by using the lens of an optical system as a vertex, and is referred to as a field of view. A value of the field of view determines a visual range of the optical system. A semi field of view (semi field of view, Semi-FOV) is half of the field of view.

Stop (stop): includes an aperture stop (aperture stop) and a field stop (field stop). The aperture stop is used to limit a width of an imaging light beam, determine an entrance pupil diameter of an optical system and a solid angle of a light beam, and affect an amount of light entering the optical system. The field stop is used to limit a field that can be imaged by the optical system in object space.

Axial chromatic aberration: is also referred to as a longitudinal chromatic aberration, a positional chromatic aberration, or an axial aberration. A beam of light parallel to an optical axis converges at different positions after passing through a lens. This aberration is referred to as a positional chromatic aberration or an axial chromatic aberration. This is because positions of images formed by the lens for light of different wavelengths are different, so that image focal planes of light of different colors cannot overlap during final imaging, and polychromatic light is scattered to form dispersion.

Distortion (distortion): also referred to as a distortion, is a degree at which an image formed by an optical system for an object is distorted relative to the object. The distortion is caused because a height of a point at which chief rays with different fields intersect a Gaussian image plane after the chief rays pass through the optical system is not equal to an ideal image height due to impact of a stop spherical aberration, and a difference between the two heights is a distortion. Therefore, the distortion only changes an imaging position of an off-axis object point on an ideal plane, so that a shape of an image is distorted, but sharpness of the image is not affected.

The following specifically describes structures of a terminal 1000, a camera module 100, and an optical lens 10 with reference to the related accompanying drawings.

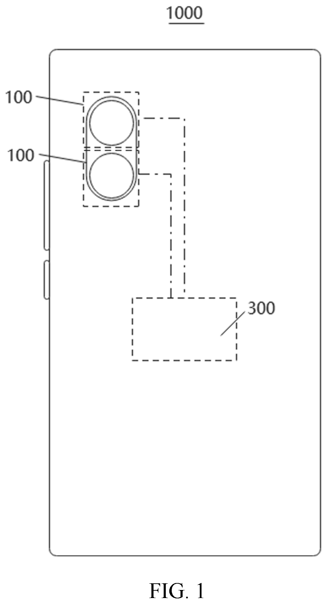

As shown in FIG. 1, a first aspect of this application provides the terminal 1000. The terminal 1000 may be a mobile phone, a tablet computer, a laptop computer, a video camera, a video recorder, a still camera, a smart television, a network surveillance device, a motion-sensing game console, a dashcam, a vehicle reversing imaging apparatus, a wearable electronic device, a small uncrewed aerial vehicle, a three-dimensional image capture device, or another form of device that has a photographing or shooting function. FIG. 1 is a diagram of a structure of the terminal 1000 according to an embodiment of this application. The terminal 1000 in this embodiment is a mobile phone, where a back panel of the terminal 1000 is shown. In this embodiment of this application, an example in which the terminal 1000 is a mobile phone is used for description.

The terminal 1000 may include the camera module 100 and an image processor 300. The image processor 300 is communicatively connected to the camera module 100. The camera module 100 is configured to obtain image data and input the image data into the image processor 300. The image processor 300 is configured to process the input image data. During actual application, the terminal 1000 further includes a housing. Both the camera module 100 and the image processor 300 are accommodated in the housing. The housing is provided with a light transmission hole. A light incident side of the camera module 100 is disposed opposite to the light transmission hole of the housing. In some embodiments, the communication connection between the camera module 100 and the image processor 300 may be for data transmission performed in an electrical connection manner such as cabling, or data transmission implemented in a manner such as coupling. The camera module 100 and the image processor 300 may alternatively implement a communication connection in any other manner that can implement data transmission. This is not specifically limited in this application.

A function of the image processor 300 is to perform optimization processing on a digital image signal by using a series of mathematical algorithm operations, and finally transmit a processed signal to a display or a memory. The image processor 300 may be an image processing chip or a digital signal processing (Digital Signal Processing, DSP) chip. A function of the image processor 300 is to quickly transfer data obtained by a photosensitive element of the camera module 100 to a central processing unit in a timely manner, and refresh the photosensitive element. Therefore, quality of the DSP chip directly affects picture quality (such as color saturation and sharpness). The image processor 300 may be further integrated into another chip (for example, a central processing chip).

In the embodiment shown in FIG. 1, the camera module 100 is disposed on a back of the terminal 1000, and is used as a rear-facing camera of the terminal 1000. In some embodiments, the camera module 100 may alternatively be selectively disposed on a front of the terminal 1000, and is used as a front-facing camera of the terminal 1000. Both the front-facing lens and the rear-facing lens may be used for taking selfies, and may also be used by a photographer to photograph other objects.

In some embodiments, a plurality of camera modules 100 may be disposed in the terminal 1000. Herein, "a plurality of" means two or more. Different camera modules 100 may have same or different structures and performances, to meet different shooting requirements. For example, in some implementations, the plurality of camera modules 100 include a zoom camera module or a fixed-focus camera module, to respectively implement a function of zoom photography or fixed-focus photography. The plurality of camera modules 100 may all be communicatively connected to the image processor 300, and the plurality of camera modules 100 may selectively cooperate with each other to achieve a better shooting effect.

It should be understood that a mounting position of the camera module 100 of the terminal 1000 in the embodiment shown in FIG. 1 is merely an example. In some other embodiments, the camera module 100 may alternatively be mounted at another position of the mobile phone. For example, the camera module 100 may be mounted at an upper part, an upper left corner, or an upper right corner on a back of the mobile phone. Alternatively, the camera module 100 may not be disposed in a body of the mobile phone, but disposed on a component capable of moving or rotating relative to the mobile phone. For example, the component can extend externally from the body of the mobile phone, retract, or rotate. The mounting position of the camera module 100 is not limited in this application.

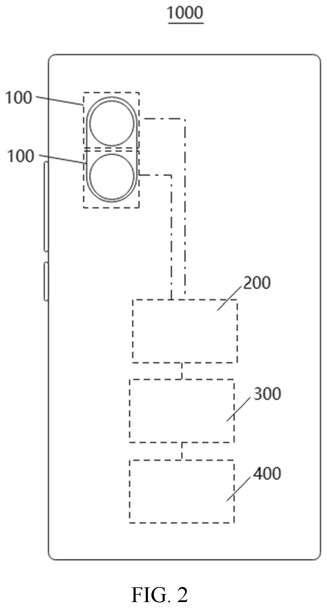

As shown in FIG. 2, in some embodiments, the terminal 1000 may further include an analog-to-digital converter 200 (which may also be referred to as an A/D converter). The analog-to-digital converter 200 is connected between the camera module 100 and the image processor 300. The analog-to-digital converter 200 is configured to convert a signal generated by the camera module 100 into a digital image signal and transmit the digital image signal to the image processor 300. Then, the image processor 300 processes the digital image signal; and finally an image or a video is displayed on a display screen or a display.

In some embodiments, the terminal 1000 further includes a memory 400. The memory 400 is communicatively connected to the image processor 300. The image processor 300 processes the digital image signal, and then transmits the image to the memory 400. In this way, when the image needs to be viewed subsequently, the image can be found in the memory at any time and displayed on the display screen. In some embodiments, the image processor 300 further compresses a processed digital image signal, and then stores a compressed digital image signal in the memory 400, to save space in the memory 400. It may be understood that FIG. 2 is merely a diagram of a structure of the terminal 1000 according to an example implementation of this application. Positions and structures of the camera module 100, the image processor 300, the analog-to-digital converter 200, and the memory 400 are merely examples. Positions and specific structures of the camera module 100, the image processor 300, the analog-to-digital converter 200, and the memory 400 are not limited in this application.

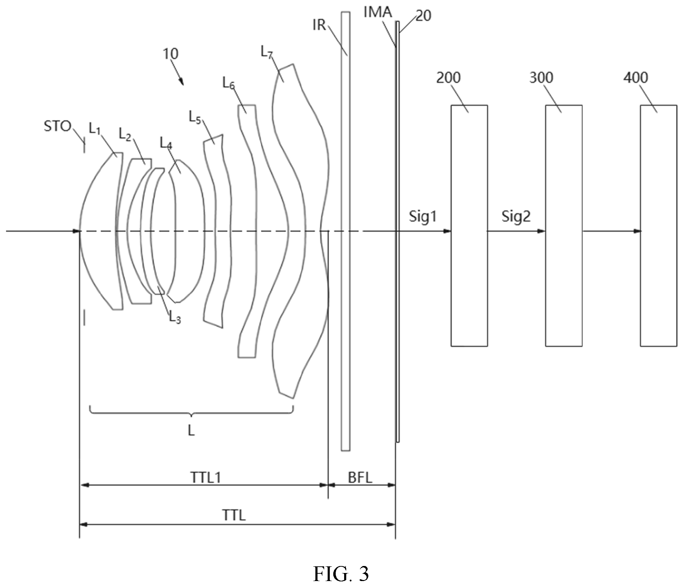

According to a second aspect, an embodiment of the present invention provides a camera module 100. The camera module 100 includes a photosensitive element 20 and an optical lens 10, and the photosensitive element 20 is located on an image side of the optical lens 10. FIG. 3 is a diagram of a structure of the camera module 100 according to an example implementation of this application.

With reference to FIG. 3, based on the foregoing embodiments, a working principle of the camera module 100 is as follows: Light reflected by a photographed target generates an optical image through the optical lens 10 and the optical image is projected to a surface of the photosensitive element 20; the photosensitive element 20 converts the optical image into an electrical signal to obtain an analog image signal Sig1, and transmits the analog image signal Sig1 obtained through conversion to the analog-to-digital converter 200; and the analog-to-digital converter 200 converts the analog image signal Sig1 into a digital image signal Sig2 and transmits the digital image signal Sig2 to the image processor 300. The image processor 300 may display the digital image signal Sig2 as an image or a video on a display screen or a display, or the image processor 300 may process the digital image signal Sig2 and then transmit a processed digital image signal to the memory 400. In this way, when the image needs to be viewed subsequently, the image can be found in the memory at any time and displayed on the display screen.

Specifically, the camera module 100 may further include a circuit board (not shown in the figure). The photosensitive element 20 is fastened to the circuit board in a manner of bonding, surface mounting, or the like; the analog-to-digital converter 200, the image processor 300, the memory 400, and the like are also connected to the circuit board in a manner of bonding, surface mounting, or the like, thereby implementing a communication connection among the photosensitive element 20, the analog-to-digital converter 200, the image processor 300, the memory 400, and the like through the circuit board. The circuit board may be a flexible circuit (flexible printed circuit, FPC) board or a printed circuit board (printed circuit board, PCB), and is configured to transmit an electrical signal. The FPC may be a single sided flexible board, a double sided flexible board, a multi-layer flexible board, a rigid-flex board, a flexible circuit board of a hybrid structure, or the like.

The photosensitive element is a semiconductor chip, and includes hundreds of thousands to several millions of photodiodes on a surface. The photosensitive element generates an electric charge when being illuminated by light, where the electric charge is converted by an analog-to-digital converter chip into a digital signal. The photosensitive element may be a charge coupled element (charge coupled device, CCD), or may be a complementary metal-oxide semiconductor (complementary metal-oxide semiconductor, CMOS) device. The CCD is made of a highly photosensitive semiconductor material, and can convert light into an electric charge, where the electric charge is converted by the analog-to-digital converter chip into a digital signal. The CCD includes a plurality of photosensitive units, and generally uses a megapixel as a unit. When a surface of the CCD is illuminated by light, each photosensitive unit reflects an electric charge on a component. Signals generated by all photosensitive units are added together to form a complete picture. The CMOS is a semiconductor mainly made by using two elements: silicon and germanium, so that semiconductors of N (with negative electrons) and P (with positive electrons) levels coexist on the CMOS. A current generated by these two complementary effects can be recorded and interpreted into an image by the analog-to-digital converter chip.

In this implementation, the terminal 1000 may be equipped with the photosensitive element 20 having a large target surface. An example in which the terminal 1000 is a mobile phone is used for description. A mobile phone in a related technology is usually equipped with a photosensitive element having a 2/3-inch or 1/1.8-inch target surface. However, the mobile phone in this embodiment of this application may be equipped with the photosensitive element 20 having a target surface greater than or equal to 1 inch. Alternatively, it may be understood that the mobile phone is equipped with a photosensitive element used in a single-lens reflex camera. The photosensitive element 20 in this implementation has the large target surface and a larger effective photosensitive area, thereby helping to improve imaging sharpness of the camera module 100, and improve imaging quality.

Certainly, in another implementation, the photosensitive element 20 may alternatively have a small-sized target surface, and the camera module 100 may be equipped with photosensitive elements 20 having target surfaces of different sizes according to a requirement. In an implementation in which the terminal 1000 includes a plurality of camera modules 100, the different camera modules 100 may be equipped with photosensitive elements 20 having target surfaces of different sizes, to meet different imaging requirements. In another implementation, the plurality of camera modules 100 may share one photosensitive element 20, or at least two camera modules of the plurality of camera modules 100 share one photosensitive element.

In some embodiments, the camera module 100 may further include a driving member (not shown in the figure) and a casing. The casing includes a through-hole and accommodation space, the through-hole communicates with the accommodation space, the through-hole is disposed opposite to a light transmission hole of the casing, and the driving member, the photosensitive element 20, and the optical lens 10 are all accommodated in the accommodation space. The photosensitive element 20 is located on the image side of the optical lens 10 and on an imaging plane of the optical lens 10. The driving member is configured to drive a part in the optical lens 10 to implement focusing. A light incident side of the optical lens 10 is disposed toward the through-hole. In another embodiment, the camera module 100 may alternatively not include a casing, and the photosensitive element 20 is fastened on a bracket or another structure.

In some embodiments, the driving member may be configured to drive related elements of the optical lens 10, to implement focusing or image stabilization of the optical lens 10 (or the camera module 100). The driving member may include one or more driving parts, and the driving part is configured to drive related elements of the optical lens 10 to perform focusing and/or optical image stabilization. When the driving member drives the related elements of the optical lens 10 to perform focusing, the driving part drives the related elements of the optical lens 10 to move relative to each other, to implement focusing. When the driving member drives the related elements of the optical lens 10 to perform image stabilization, the driving part drives the related elements of the optical lens 10 to move or rotate relative to the photosensitive element 20, and/or drives the related elements of the optical lens 10 to move or rotate relative to one another, to implement optical image stabilization. The driving part may be a driving structure such as a motor or an electric machine.

A total track length of the optical lens 10 affects an overall height of the camera module 100, and the overall height of the camera module 100 is an important reference indicator for size design of the terminal 1000. Therefore, to lower the overall height of the camera module 100, in some embodiments, the driving member may be further configured to drive the optical lens 10 to be far away from or close to the photosensitive element 20, so that the camera module 100 has different states. In an example implementation, the optical lens 10 of the camera module 100 may adopt a pop-up design.

For example, the camera module 100 has a first state and a second state. In the first state, a distance between a lens element that is in the optical lens 10 and that is closest to the photosensitive element 20 and the photosensitive element 20 is a first distance. In the second state, a distance between a lens element that is in the optical lens 10 and that is closest to the photosensitive element 20 and the photosensitive element 20 is a second distance. The second distance is greater than the first distance.

In the foregoing implementation, when the camera module 100 is in the first state, the optical lens 10 is disposed close to the photosensitive element 20 and is in a non-popped-up state, and the total track length of the optical lens 10 is shorter. This helps to implement a thinning design of the terminal 1000 in which the camera module 100 is used. For example, the terminal 1000 is a mobile phone. When the camera module 100 is in the first state, the camera module 100 is in a non-working state, the optical lens 10 is disposed close to the photosensitive element 20, and a height of the optical lens 10 protruding from a housing of the terminal is smaller. This does not impose a constraint on a thinning design of the terminal 1000, so that the terminal 1000 can have a good slim and lightweight feeling. When the camera module 100 needs to be used, the optical lens 10 at least partially extends out of the housing through a light entrance hole, so that the camera module 100 switches from the first state to the second state. In the second state, the camera module 100 may implement a shooting function, and the optical lens 10 is far away from the photosensitive element 20, so that the optical lens 10 may have a longer back focal length. This can facilitate a focusing or zooming operation of the camera module 100, and help the camera module 100 achieve a better shooting effect. In this embodiment, the camera module 100 may drive, through the driving member, the motor, or the like, the optical lens 10 to move, to drive the camera module 100 to switch between the first state and the second state. This is not specifically limited in this application.

In some embodiments, the optical lens 10 may further include an infrared filter. The infrared filter may be disposed at an end that is of the optical lens 10 and that faces the image side, and is located between a lens element that is in the optical lens 10 and that is closest to the imaging plane and the imaging plane. Light that passes through each lens element of the optical lens 10 is illuminated on the infrared filter, and is illuminated on the photosensitive element 20 disposed on the imaging plane after being filtered by the infrared filter. The infrared filter may eliminate unnecessary light projected onto the photosensitive element 20, and prevent the photosensitive element 20 from generating a false color or a ripple, to improve an effective resolution and color restoration of the photosensitive element 20. In some other implementations, the infrared filter may also be fastened on the circuit board on which the photosensitive element 20 is located. Other elements included in the camera module 100 are not described in detail herein.

In another implementation, an imaging correction element may be further disposed on a side that is of the optical lens 10 and that is close to the imaging plane, to achieve an image correction effect (such as bending).

The following specifically describes a structure of the optical lens 10 and setting of related optical parameters with reference to the accompanying drawings.

As shown in FIG. 3, in some embodiments, an embodiment of this application provides an optical lens 10. The optical lens 10 may include at least seven lens elements, each of the lens elements L includes an object side surface facing an object side and an image side surface facing an image side, and the at least seven lens elements L include a first lens element L1, a second lens element L2, a third lens element L3, a fourth lens element L4, a fifth lens element L5, a sixth lens element L6, and a seventh lens element L7 sequentially arranged in a direction from the object side to the image side. The first lens element L1 has a positive focal power, a refractive index of the first lens element L1 is greater than 1.6, a sagitta at an edge of the image side surface of the third lens element L3 is greater than 0.3 mm, and a sagitta at an edge of the object side surface of the third lens element L3 is greater than 0.

It may be understood that the optical lens 10 includes a plurality of different lens elements, and combinations (for example, an arrangement sequence of the lens elements in an optical path, a lens element material, a refractive index, and a surface curvature) of the different lens elements result in different optical performance. A lens element closer to the object side in the optical lens 10 contributes more in adjusting the optical path, and is more important for adjusting an optical effect. Optical performance of the first lens element L1 and the third lens element L3 is limited in this embodiment of this application. The following provides descriptions with reference to specific implementations.

The first lens element L1 has the positive focal power. That is, the first lens element L1 has a light converging function. The refractive index of the first lens element L1 is greater than 1.6. For example, the refractive index of the first lens element L1 may be any one of 1.65, 1.75, 1.80, 1.85, 1.90, or 2.0. To meet a requirement for the refractive index of the first lens element L1, for example, the first lens element L1 may be made of a glass material. In some embodiments, the first lens element L1 may alternatively be made of another composite material whose refractive index ranges from 1.6 to 2.0.

Based on a fact that the first lens element L1 has the light converging function and the refractive index of the first lens element L1 is greater than 1.6, the first lens element L1 has a strong capability of converging light. As a lens element that is closest to the object side and that is in the optical lens 10, the first lens element L1 can effectively adjust the optical path. In comparison with a lens element having a refractive index of about 1.55 in a conventional technology, the first lens element L1 in this embodiment of this application has a higher refractive index, so that the first lens element L1 can have a smaller axial thickness while having the good light converging capability, and the thinner first lens element L1 that offers a strong aberration correction capability can be obtained. The first lens element L1 satisfying the foregoing refractive index can reduce the axial thickness of the first lens element L1 while ensuring imaging performance, so that a total track length of the optical lens 10 can be shortened.

A sagitta of a lens element surface represents a distance between a projected point of any point on the lens element surface onto an optical axis and a center point of the lens element surface. It may be understood that, when the projected point of the point is on an image side of the lens element surface, a sagitta of the point is a positive number. Instead, when the projected point of the point is on an object side of the lens element surface, a sagitta of the point is a negative number. With reference to FIG. 3, the sagitta at the edge of the image side surface of the third lens element L3 is greater than 0.3 mm, that is, a distance between a projected point of the edge of the image side surface of the third lens element L3 onto the optical axis and a central point of the center of the image side surface of the third lens element L3 is greater than 0.3 mm, and the projected point of the edge of the image side surface of the third lens element L3 onto the optical axis is on the image side of the image side surface of the third lens element L3. The sagitta at the edge of the object side surface of the third lens element L3 is greater than 0. That is, a projected point of the edge of the object side surface of the third lens element L3 onto the optical axis is on the image side of the object side surface of the third lens element L3.

The sagitta at the edge of the image side surface of the third lens element L3 is greater than 0.3 mm. Specifically, the sagitta at the edge of the image side surface of the third lens element L3 may range from 0.3 mm to 0.50 mm, for example, 0.32 mm, 0.42 mm, 0.46 mm, or 0.48 mm. With reference to a fact that the sagitta at the edge of the object side surface of the third lens element L3 is greater than 0, an edge region of the third lens element L3 may be limited to be closer to the image side relative to a paraxial region of the third lens element L3. The third lens element L3 of this shape can have a good light converging capability, and a position of light may be adjusted and corrected at the edge of the third lens element L3, thereby improving imaging quality.

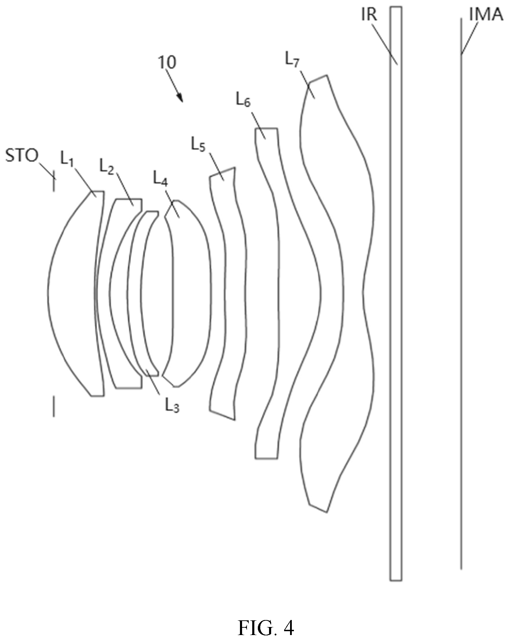

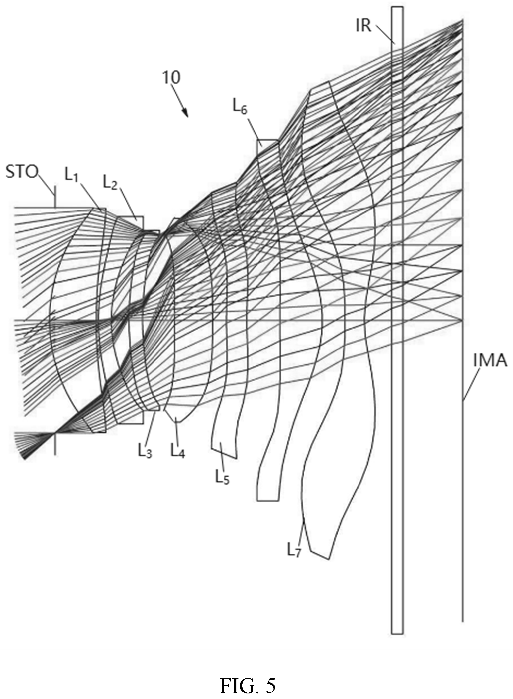

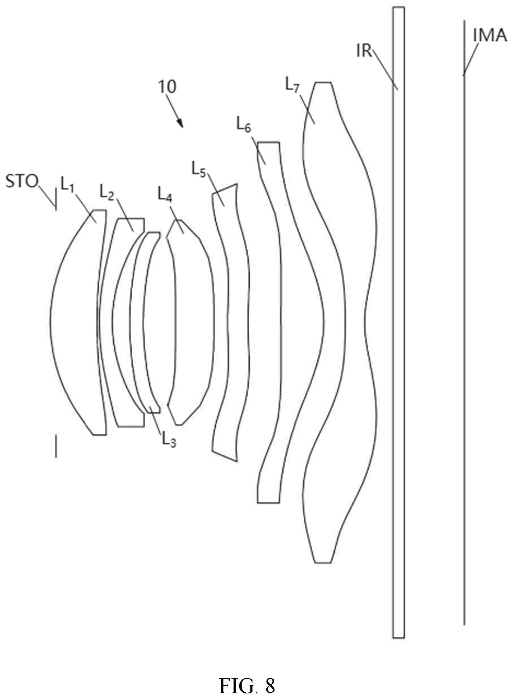

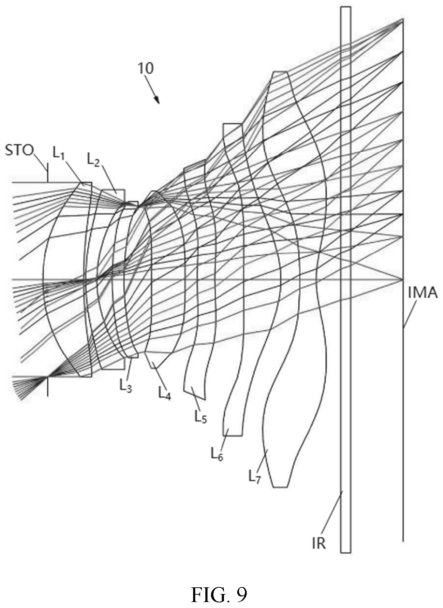

It should be noted that, regardless of whether the third lens element L3 has a positive focal power or a negative focal power, the third lens element L3 has the good light converging capability. With reference to FIG. 4 and FIG. 5, FIG. 4 is a diagram of a structure of the optical lens 10 according to a first embodiment of this application, and FIG. 5 shows an example of a light propagation path in the optical lens 10 according to a first embodiment by using lines. The third lens element L3 has a positive focal power, and the third lens element L3 can adjust an emergent position and an emergent angle of light, to correct a position of the light. With reference to FIG. 8 and FIG. 9, FIG. 8 is a diagram of a structure of the optical lens 10 according to a second embodiment of this application, and FIG. 9 shows an example of a light propagation path in the optical lens 10 according to a second embodiment by using lines. The third lens element L3 has a negative focal power, and the third lens element L3 can adjust an angle of light, to adjust or correct a position of the light. With reference to FIG. 5 and FIG. 9, because the edge region of the third lens element L3 is closer to the image side relative to the paraxial region of the third lens element L3, no matter whether the third lens element L3 has a positive focal power or a negative focal power, light on the image side surface of the third lens element L3 is still more converged than light on the object side surface of the third lens element L3, and the third lens element L3 has a light converging function. This allows the light to be more concentrated, so that the light can reach an expected position in a gap at a shorter distance, thereby helping to shorten a gap between the third lens element L3 and the fourth lens element L4, and reducing the total track length of the optical lens 10.

In the foregoing embodiment, the optical lens 10 can have the good light converging capability, the first lens element L1 can effectively adjust the optical path, and can have the smaller axial thickness while having the good light converging capability, and the thinner first lens element L1 that offers the strong aberration correction capability can be obtained. The third lens element L3 further converges light and adjusts an aberration of the light, so that the optical lens 10 has a shorter total track length while ensuring that the optical lens 10 has a good imaging capability, thereby facilitating disposing of the optical lens 10. Especially, when the optical lens 10 is disposed in the terminal 1000, thinning of the terminal 1000 can be facilitated.

In some embodiments, the optical lens 10 may be applicable to a large aperture. That is, the optical lens 10 may be used in a scene in which a large amount of light enters. An amount of light entering an aperture is inversely correlated with an f-number. A smaller f-number indicates a larger amount of light entering the aperture. The large aperture herein may be an aperture whose f-number is less than or equal to F/2.8. For example, the f-number may be F/1.8, F/1.6, F/1.4, or the like. When the optical lens 10 provided in this embodiment uses the large aperture for photography, a large amount of light enters the optical lens 10, and both the first lens element L1 and the third lens element L3 have a good light converging capability. Even if the total track length of the optical lens 10 is shorter, a good light converging effect can also be achieved for the light entering, so that the optical lens 10 has good imaging quality during large-aperture photography. The optical lens 10 provided in this application can be applied to the large aperture and maintain high imaging performance, thereby exhibiting promising application prospects.

The terminal 1000 in which the optical lens 10 in the foregoing embodiment is used may have the large aperture, a small depth of field, and a high-quality imaging mode. For example, in an embodiment in which the terminal 1000 is a mobile phone, the mobile phone may have a "portrait mode". In this mode, the optical lens 10 can meet shooting requirements of a large aperture, a small depth of field, and high quality, so that the mobile phone has a good shooting effect, thereby improving user experience.

It should be noted that a focal power and a material of another lens element that is in the optical lens 10 and that is not limited may not be limited. During actual application, an optical property of the another lens element may be adaptively adjusted according to a requirement of the optical lens 10. The lens element may be selectively made of a plastic material, a glass material, or another composite material according to an optical requirement. The plastic material allows for easy fabrication of optical lens elements with various complex shapes, but the plastic material offers a smaller range of selectable refractive indexes. However, a refractive index of an optical lens element made of the glass material has a larger selection range, and it is easier to obtain a thinner glass lens element with better performance, but it is difficult to fabricate an optical lens element structure with a complex shape. In some embodiments, the lens element of the optical lens 10 may also include two or more sub-lens elements bonded together, and materials of the two sub-lens elements may be different. The sub-lens elements of different materials are selected to form one lens element, and an Abbe number and a refractive index of the lens element may be adjusted. This is equivalent to that a range of the refractive index and a range of the Abbe number of the lens element can be further increased, and a thinner lens element with better performance is more easily obtained.

Based on this, in some embodiments of this application, in consideration of production costs, efficiency, and an optical effect, specific application materials of different lens elements are properly used according to a requirement. In some embodiments, in the at least seven lens elements of the optical lens 10, the first lens element L1 is made of glass, and the remaining lens elements are all made of a resin material. This ensures that the first lens element L1 has a good light converging function, and the remaining lens elements all made of the resin material can help to fabricate an optical lens element structure with a complex shape. This allows for different refraction processing on light, to meet different optical requirements.

As shown in FIG. 3, a back focal length BFL (Back Focal Length) of the optical lens 10 in this embodiment of this application is a minimum distance between an image side surface of the seventh lens element L7 of the optical lens 10 and the imaging plane (in FIG. 3, the photosensitive element 20 overlaps the imaging plane IMA). The total track length TTL (Total Track Length) of the optical lens 10 is a maximum distance, on the optical axis, between the object side surface of the first lens element L1 and the imaging plane. An optical body length TTL1 of the optical lens 10 is a maximum distance, on the optical axis, between the object side surface of the first lens element L1 and the image side surface of the seventh lens element L7. It may be understood that the TTL1 is a main factor for forming a height of the optical lens 10 in an optical axis direction. Meanings represented by the BFL, the TTL, and the TTL1 that appear at all positions in this application are the same; and details are not described again when the BFL, the TTL, and the TTL1 appear subsequently.

In some embodiments, the back focal length BFL of the optical lens 10 and the total track length TTL of the optical lens 10 may meet a relational expression 4≤TTL/BFL≤7. A ratio of a total track length TTL to a back focal length BFL of a conventional optical system is usually greater than 10. That is, a conventional lens design has a longer TTL but a shorter BFL. However, in this embodiment of this application, a ratio of the total track length TTL to the back focal length BFL meets the foregoing relational expression, so that the back focal length BFL accounts for a larger proportion in comparison with the total track length TTL of the optical lens 10, and the optical lens 10 has a longer back focal length BFL in comparison with a conventional optical lens. In a large-aperture shooting scene, the optical lens has a large light entering range and a large amount of light entering, and a longer optical path and a longer back focal length BFL are required to implement convergent imaging. The optical lens 10 in this embodiment of this application has a longer back focal length BFL, and can provide a longer converging path for light, to meet a path requirement for light converging in a large-aperture scene. When a larger aperture is used, the optical lens 10 can have better imaging performance, thereby resolving an imaging problem such as defocusing, blurring, or distortion. In addition, in comparison with the conventional optical lens, the optical lens 10 in this embodiment has a shorter optical body length TTL1, thereby facilitating disposing of the optical lens 10, and helping to implement thinning of the terminal in which the optical lens 10 is disposed.

The optical lens 10 in the foregoing embodiment has the longer back focal length BFL, and a gap between the image side surface of the seventh lens element L7 and the imaging plane is larger, so that the optical lens 10 can be further allowed to be used in the camera module 100 designed in a pop-up manner. Specifically, when the pop-up camera module 100 is in a working state, the back focal length BFL of the optical lens 10 is longer, and a sufficient gap can be reserved, so that light can form a clear image on the imaging plane, and the optical lens 10 can have good imaging quality. The gap between the image side surface of the seventh lens element L7 and the imaging plane can further reserve space for moving the optical lens 10. When the camera module 100 is switched to a non-working state, the optical lens 10 can move toward an interior of a housing for at least a part of a distance, to reduce a gap between the optical lens and the photosensitive element 20, thereby lowering a height of optical lens 10 protruding from the terminal 1000, and facilitating a thinning design of the terminal 1000 in which the camera module 100 is used.

It can be learned from the foregoing description that the optical lens 10 in this embodiment of this application has a longer back focal length in a popped-up state of the camera module 100. This facilitates a focusing or zooming operation of the camera module 100, and helps the camera module 100 achieve a better shooting effect. In addition, the optical lens 10 may alternatively adopt a structural design with a variable aperture, so that different depth of field ranges can be provided for different scenes. Therefore, multi-scene shooting requirements can be catered. In addition, the optical lens 10 is equipped with the photosensitive element having a large target surface to implement better optical quality, thereby helping to improve imaging quality of the camera module 100.

In some embodiments, a ratio of a focal length f1 of the first lens element L1 in the optical lens 10 to a system focal length f of the optical lens 10 meets a relational expression f1/f≤1. For example, the ratio of the focal length f1 of the first lens element L1 to the system focal length f may be 0.8 or 0.9. It may be understood that the first lens element L1 has a positive focal power, and the ratio of the focal length f1 of the first lens element L1 to the system focal length f of the optical lens 10 is greater than 0. In the optical lens 10 that meets the foregoing relational expression, the focal length f1 of the first lens element L1 is greater than 0 and less than the system focal length f, so that a focal length range of the first lens element L1 can be effectively controlled, and the first lens element L1 has a good light converging function, thereby ensuring that the system can better converge light. In addition, in this embodiment, the focal length of the first lens element L1 is controlled, light has good convergence after being emergent from the image side surface of the first lens element L1, and the second lens element L2 can be disposed close to the first lens element L1, so that a gap between the first lens element L1 and the second lens element L2 is reduced, thereby helping to reduce the total track length TTL of the optical lens 10.

In some embodiments, a ratio of a focal length f2 of the second lens element L2 to the system focal length f of the optical lens 10 meets a relational expression -2≤f2/f≤0. For example, the ratio of the focal length f2 of the second lens element L2 to the system focal length f may be - 1.30, -1.34, -1.4, or -1.46. It may be understood that the ratio of the focal length f2 of the second lens element L2 to the system focal length f of the optical lens 10 is less than 0. It can be learned that the second lens element L2 has a negative focal power, that is, has a light diverging function. The ratio of the focal length f2 of the second lens element L2 to the system focal length f of the optical lens 10 is greater than -2, and a range of the focal length f2 of the second lens element L2 enables the second lens element L2 to effectively control a propagation direction of light.

A side surface of each lens element in this embodiment of this application may be a spherical surface or an aspherical surface. Generally, if a curvature center of any point on a side surface of a lens element is on an image side of a tangent of the point, a curvature radius at the point is positive. If a curvature center of any point on a side surface of a lens element is on an object side of a tangent of the point, a curvature radius at the point is negative. With reference to FIG. 3, in some embodiments, a curvature radius of a center of an image side surface of the third lens element L3 is less than 0. That is, the center of the image side surface of the third lens element L3 is in a shape of concave toward the object side.

In some embodiments, a paraxial region of the sixth lens element L6 has a positive focal power. It should be noted that the paraxial region is a region having an ideal optical property on the lens element. In the region, an actual optical path calculation result of the lens element is the same as an ideal optical path calculation result calculated by using a Gaussian formula, and the region is usually at a position close to an optical center on the lens element. The paraxial region of the sixth lens element L6 has the positive focal power, and the sixth lens element L6 with the positive focal power has a light converging function in the paraxial region, thereby facilitating convergent imaging of light.

In the foregoing embodiment, a light refraction characteristic of an edge region of the sixth lens element L6 may be convergence or divergence, and the refraction characteristic of the edge region of the sixth lens element L6 may be adaptively adjusted based on imaging performance of the optical lens 10, thereby helping to improve image quality of an edge field of view of the camera module 100.

In some embodiments, a curvature radius of a center of an image side surface of the sixth lens element L6 is less than 0, that is, a shape of the center of the image side surface of the sixth lens element L6 is convex, and the sixth lens element L6 can effectively control a light direction in a paraxial region, and adjust a position at which light is incident on the seventh lens element L7 while converging the light, thereby correcting aberrations and achieving better imaging performance.

In some embodiments, a paraxial region of the seventh lens element L7 has a negative focal power, and the paraxial region of the seventh lens element L7 has a light diverging function. In some embodiments, a curvature radius of a center of the object side surface of the seventh lens element L7 is less than 0, and the center of the object side surface of the seventh lens element L7 is a concave surface, so that the seventh lens element L7 can effectively control a light direction of an internal field. In conjunction with a property that the seventh lens element L7 has the negative focal power, an emergent position of the light can be adjusted while diverging the light, thereby allowing the light to achieve good convergent imaging on the imaging plane.

In the foregoing embodiment, a light refraction characteristic of the seventh lens element L7 may be convergence or divergence, and the refraction characteristic of the edge region of the seventh lens element L7 may be adaptively adjusted based on imaging performance of the optical lens 10, thereby helping to improve image quality of an edge field of view of the camera module 100.

The sixth lens element L6 and the seventh lens element L7 may further cooperate to correct a system spherical aberration, reduce a distortion of an edge field of view, and correct astigmatism, thereby improving imaging quality of the optical lens 10.

In some embodiments, the shape of the center of the image side surface of the sixth lens element L6 is convex, and the center of the object side surface of the seventh lens element L7 is a concave surface. As shown in FIG. 3, the center of the image side surface of the sixth lens element L6 and the center of the object side surface of the seventh lens element L7 have good shape adaptation, so that a possibility of position interference between the sixth lens element L6 and the seventh lens element L7 can be reduced, and relative positions of the sixth lens element L6 and the seventh lens element L7 can be more flexibly arranged. In this way, an arrangement solution in which a gap between the sixth lens element L6 and the seventh lens element L7 is small is more easily implemented, and the optical body length of the optical lens 10 is easily reduced.

In some embodiments, the system focal length f of the optical lens 10 and an entrance pupil diameter EPD of the optical lens 10 may meet a relational expression f/EPD≤1.55. An f-number is equal to a ratio of the system focal length of the optical lens 10 to the entrance pupil diameter EPD of the optical lens 10. The f-number of the optical lens 10 that meets the foregoing relational expression is less than 1.55. That is, the entrance pupil diameter EPD of the optical lens 10 is large. The optical lens 10 can have a larger amount of light entering, so that a depth of field of photography becomes shallow, a focus in a depth of field range is clear, and another object not in the depth of field range is blurred. In this way, a subject can be better highlighted and a picture can be simplified.

It may be understood that the optical lens 10 provided in this embodiment of this application is not only applicable to the large aperture, but also is used as an optional working mode of large-aperture photography. In some embodiments, the optical lens 10 may be provided with a stop STO. The stop STO herein is specifically an aperture stop. The f-number can be adjusted by changing an aperture diameter of the stop STO. Different aperture diameters correspond to different f-numbers, that is, correspond to different depths of field, so that the optical lens 10 can adapt to different shooting scenes. For example, in a dark environment, the optical lens 10 may reduce the f-number to increase an amount of light entering, thereby enhancing image quality. In a bright environment, the optical lens 10 may increase the f-number to reduce an amount of light entering, thereby preventing overexposure from affecting imaging performance.

In addition, when the aperture diameter of the stop STO is larger, the f-number of the optical lens 10 is smaller, and the optical lens 10 has a large-aperture characteristic. Therefore, a depth of field may become shallow, and a focus is clear, and another object is not in the depth of field range is blurred, so that a subject can be better highlighted and a picture can be simplified. In addition, using the large aperture also means that light entering the optical lens 10 per unit time increases. When a picture exposure amount remains unchanged, a shutter speed can be increased in a large-aperture mode. During hand-held shooting in an environment with insufficient light or a dark environment, an increase in the shutter speed can mitigate impact of hand shake on image sharpness, thereby helping the camera module 100 to capture a night-scene image with a better effect. When the aperture diameter of the stop STO is smaller, the f-number of the optical lens 10 is larger, and the optical lens 10 has a small-aperture characteristic. Therefore, a large depth of field can be obtained, so that a background or a foreground outside a focusing subject can also be kept clear. In addition, the small aperture can reduce an amount of light entering the optical lens 10, so that the shutter speed can be slowed down, thereby helping to leave a motion trail of a moving object on a picture. Therefore, the optical lens 10 may further capture a scene such as flowing water, light trails, star trails, and light painting in a small-aperture mode.

In an embodiment in which the variable aperture is used, an entrance pupil diameter EPD is equal to a ratio of a focal length of the optical system to the f-number, EPDmax is a maximum entrance pupil diameter of the optical lens 10, and EPDmin is a minimum entrance pupil diameter of the optical lens 10. It may be understood that the entrance pupil diameter EPD changes with an f-number of the variable aperture. When the f-number of the variable aperture is a minimum f-number in a variable range, an entrance pupil diameter corresponding to the minimum f-number is a maximum entrance pupil diameter EPDmax. When the f-number of the variable aperture is a maximum f-number in a variable range, an entrance pupil diameter corresponding to the maximum f-number is a minimum entrance pupil diameter EPDmin. In some embodiments, the optical lens 10 may meet a relational expression f/(EPDmax-EPDmin)≥1.6, and the f-number of the optical lens 10 that meets the relational expression can be adjusted. In an adjustable range of the f-number, by adjusting different f-numbers, the optical system 10 can provide different depth of field ranges for different scenes, so that multi-scene shooting requirements can be catered.

A value of a field of view of the optical lens 10 determines a field range of the optical lens 10, and a semi field of view (Semi Field of View, Semi-FOV) is half of the field of view. In some embodiments, a maximum semi field of view Semi-FOV (Semi Field of View) of the optical lens 10 may be less than or equal to 43°. In this range, the optical lens 10 can effectively control a scope of a shooting angle of a system, so that an optical distortion is smaller when the optical lens 10 is used as a main camera lens, and high imaging performance can be achieved.

It may be understood that there is a geometric correspondence among the system focal length f of the optical lens 10, the maximum semi field of view Semi-FOV of the optical lens 10, and the target surface of the photosensitive element 20. In some embodiments, the system focal length f of the optical lens 10 and the maximum semi field of view Semi-FOV of the optical lens 10 satisfy a relationship f×tan(Semi-FOV)≥7.5 mm. The camera module 100 in this embodiment has a large target surface, thereby helping to increase imaging brightness and resolving power.

In some embodiments, the system focal length f of the optical lens 10 and the maximum semi field of view Semi-FOV of the optical lens 10 meet a relational expression f×tan(Semi-FOV)≥8 mm.

The optical lens 10 in this embodiment of this application can implement balancing among a large aperture, a large target surface, and a system height. To be specific, the system focal length f of the optical lens 10 and the entrance pupil diameter EPD of the optical lens 10 may meet the relational expression f/EPD≤1.55, and the system focal length f of the optical lens 10 and the maximum semi field of view Semi-FOV of the optical lens 10 meet the relational expression f×tan(Semi-FOV)≥7.5 mm. The optical lens 10 in this embodiment uses the large aperture and the large target surface, the first lens element L1 that has good light converging performance and a small thickness can be obtained based on the large refractive index of the first lens element L1 of the optical lens 10, and the third lens element L3 can further converge light and adjust an aberration of the light. The optical lens 10 in this embodiment can have a good light converging capability. When the large aperture and the large target surface are used, it is ensured that the optical lens 10 has a good imaging capability, and the optical lens 10 has a shorter total track length. The optical lens 10 is more convenient to implement disposing. Especially when the optical lens 10 is disposed in the terminal 1000, thinning of the terminal 1000 can be facilitated.

A plurality of specific embodiments of this application may be obtained with reference to the relational expressions provided in the foregoing different implementations. The following describes the imaging performance of the optical lens 10 in detail with reference to specific embodiments.

As shown in FIG. 4, in a first embodiment of this application, in a direction from an object side to an image side, a stop STO, a first lens element L1 having a positive focal power, a second lens element L2 having a negative focal power, a third lens element L3 having a positive focal power, a fourth lens element L4 having a positive focal power, a fifth lens element L5 having a negative focal power, a sixth lens element L6 having a positive focal power, a seventh lens element L7 having a negative focal power, an infrared filter IR, and an imaging plane IMA are sequentially arranged. Specific design parameters in the first embodiment are as follows:

A sagitta sag at an edge of an image side surface of the third lens element L3 satisfies sag=0.48 mm.

A system focal length f of the optical lens 10 and an entrance pupil diameter EPD of the optical lens 10 satisfy f/EPD=1.51.

A curvature radius R12 of an image side surface of the sixth lens element L6 satisfies R12=-3.03.

The system focal length f of the optical lens 10, and a maximum entrance pupil diameter EPDmax and a minimum entrance pupil diameter EPDmin of the optical lens 10 satisfy f/(EPDmax-EPDmin)=2.44.

The system focal length f of the optical lens 10 and a maximum semi field of view Semi-FOV of the optical lens 10 satisfy f×tan(Semi-FOV)=8.235.

The maximum semi field of view Semi-FOV of the optical lens 10 satisfies Semi-FOV=41.26°.

A focal length f₁ of the first lens element L1 and the system focal length f of the optical lens 10 satisfy f₁/f=0.825.

A focal length f₂ of the second lens element L2 and the system focal length f of the optical lens 10 satisfy f₂/f=-1.452.

Based on the design parameters in the first embodiment, basic parameters of the optical lens 10 in the first embodiment are shown in Table 1A below.

**Table 1A: Basic parameters of the optical lens in the first embodiment**

| | |
|---|---|
| System focal length f | 9.3887 mm |
| F-number F | 1.51 |
| Maximum semi field of view Semi-FOV | 41.26° |
| Maximum image height IH | 16.6 mm |
| Total track length TTL | 11.421 mm |
| Design wavelength | 650 nm, 610 nm, 555 nm, 510 nm, and 470 nm |

In Table 1A, the maximum image height IH is specifically a length of a diagonal of an effective pixel region on an imaging plane of the optical lens 10, that is, represents a length of a diagonal of an effective pixel region on a photosensitive element 20.

Based on the design parameters in the first embodiment, a curvature radius, a thickness, a refractive index, and an Abbe coefficient of each lens element of the optical lens 10 in the first embodiment are shown in Table 1B below. The thickness is a distance from a surface to a next surface along an optical axis. The Abbe coefficient of the lens element, also referred to as a dispersion coefficient, represents a degree of dispersion of an optical material at different wavelengths.

**Table 1B: Curvature radius, thickness, refractive index, and Abbe coefficient of each lens element of the optical lens**

| Structure | Surface shape | Surface number | Curvature radius | Thickness | Refractive index | Abbe coefficient |
|---|---|---|---|---|---|---|
| Stop | Spherical surface | STO | inf | -0.16 | | |
| L1 | Aspherical surface | S1 | 4.444855 | 1.292599 | 1.77684672 | 49.60352 |
| | Aspherical surface | S2 | 14.81555 | 0.060793 | | |
| L2 | Aspherical surface | S1 | 6.675672 | 0.355077 | 1.67756948 | 19.24591 |
| | Aspherical surface | S2 | 3.791526 | 0.487063 | | |
| L3 | Aspherical surface | S1 | 7.767166 | 0.372064 | 1.67756948 | 19.24591 |
| | Aspherical surface | S2 | 7.646059 | 0.884285 | | |
| L4 | Aspherical surface | S1 | 267.2656 | 1.056438 | 1.54586938 | 56.1354 |
| | Aspherical surface | S2 | -40.0583 | 0.377687 | | |
| L5 | Aspherical surface | S1 | 10.96587 | 0.56 | 1.67756948 | 19.24591 |
| | Aspherical surface | S2 | 9.773929 | 0.923589 | | |
| L6 | Aspherical surface | S1 | 52.29755 | 1.170077 | 1.54586938 | 56.1354 |
| | Aspherical surface | S2 | -3.03239 | 0.622197 | | |
| L7 | Aspherical surface | S1 | -15.4714 | 0.536 | 1.54586938 | 56.1354 |
| | Aspherical surface | S2 | 3.360931 | 1.759905 | | |
| IR | Spherical surface | S1 | inf | 0.31 | 1.51827402 | 64.16641 |
| | Spherical surface | S2 | inf | 0.653784 | | |
| Imaging plane | Spherical surface | IMA | inf | 0 | | |

In Table 1B above, STO represents a stop, L1 represents a first lens element, L2 represents a second lens element, L3 represents a third lens element, L4 represents a fourth lens element, L5 represents a fifth lens element, L6 represents a sixth lens element, L7 represents a seventh lens element, and IR represents an infrared filter. S1 represents an object side surface of a lens element, and S2 represents an image side surface of a lens element. IMA represents an imaging plane.

Based on the design parameters in the first embodiment, a conic coefficient and an aspheric coefficient of each lens element of the optical lens 10 in the first embodiment are shown in Table 1C below.

**Table 1C: Conic coefficient and aspheric coefficient of each lens element of the optical lens**

| | | Conic coefficient K | A2 | A4 | A6 | A8 | A10 | A12 | A14 |
|---|---|---|---|---|---|---|---|---|---|
| L1 | S1 | 0 | 0 | - 0.00034 | 0.000899 | - 0.00122 | 0.00108 9 | - 0.00067 | 0.00029 1 |
| | S2 | 0 | 0 | 0.002499 | 0.001852 | - 0.00267 | 0.001576 | - 0.00062 | 0.000174 |
| L2 | S1 | 0 | 0 | - 0.00276 | 0.006974 | - 0.00889 | 0.00745 | - 0.00481 | 0.002348 |
| | S2 | 0 | 0 | - 0.00642 | 0.001077 | 0.003282 | - 0.00572 | 0.0047 | - 0.00234 |
| L3 | S1 | 0 | 0 | - 0.00594 | 0.00021 2 | 0.00314 4 | - 0.00541 | 0.00582 1 | - 0.00422 |
| | S2 | 0 | 0 | - 0.00454 | - 0.00108 | 0.00513 8 | - 0.00787 | 0.00808 1 | - 0.00576 |
| L4 | S1 | 0 | 0 | - 0.00653 | 0.00804 3 | - 0.01822 | 0.02483 5 | - 0.02306 | 0.01503 3 |
| | S2 | 0 | 0 | 0.01493 | 0.005011 | 0.00418 | 0.00362 | -0.0028 | 0.00163 |
| L5 | S1 | 0 | 0 | - 0.02749 | 0.00398 5 | 0.00094 3 | - 0.00155 | 0.00093 3 | - 0.00036 |
| | S2 | 0 | 0 | - 0.02364 | 0.00297 5 | 0.00010 3 | - 0.00031 | 0.00015 2 | -4.8E-05 |
| L6 | S1 | -98 | 0 | -0.0016 | -4.2E-05 | - 0.00056 | 0.00026 8 | -5.9E-05 | 7.36E-06 |
| | S2 | -1 | 0 | 0.02389 9 | - 0.00675 | 0.00154 | - 0.00031 | 6.31E-05 | -1.1E-05 |
| L7 | S1 | 0 | 0 | - 0.00518 | - 0.00396 | 0.00155 | - 0.00029 | 3.49E-05 | -2.9E-06 |
| | S2 | -1 | 0 | - 0.03402 | 0.00565 1 | - 0.00078 | 8.71E-05 | -7.6E-06 | 5.2E-07 |
| | | A16 | A18 | A20 | A22 | A24 | A26 | A28 | A30 |
| L1 | S1 | -9.1E-05 | 2.1E-05 | -3.5E-06 | 4.17E-07 | -3.5E-08 | 1.93E-09 | -6.3E-11 | 9.38E-13 |
| | S2 | -3.6E-05 | 5.26E-06 | -5.4E-07 | 3.64E-08 | -1.5E-09 | 2.59E-11 | 0 | 0 |
| L2 | S1 | -0.00085 | 0.00022 4 | -4.3E-05 | 5.92E-06 | -5.7E-07 | 3.63E-08 | -1.4E-09 | 2.34E-11 |
| | S2 | 0.000719 | - 0.00012 | -1.1E-06 | 5.21E-06 | -1.2E-06 | 1.46E-07 | -9.2E-09 | 2.45E-10 |
| L3 | S1 | 0.002142 | - 0.00077 | 0.00019 9 | -3.6E-05 | 4.62E-06 | -3.8E-07 | 1.89E-08 | -4.2E-10 |
| | S2 | 0.002926 | - 0.00107 | 0.00028 3 | -5.4E-05 | 7.07E-06 | -6.2E-07 | 3.22E-08 | -7.6E-10 |
| L4 | S1 | -0.00703 | 0.00238 7 | - 0.00059 | 0.00010 4 | -1.3E-05 | 1.08E-06 | -5.3E-08 | 1.2E-09 |
| | S2 | -0.00069 | 0.00021 3 | -4.7E-05 | 7.41E-06 | -8.1E-07 | 5.81E-08 | -2.5E-09 | 4.69E-11 |
| L5 | S1 | 9.49E-05 | -1.7E-05 | 2.2E-06 | -1.9E-07 | 1.18E-08 | -4.6E-10 | 1.07E-11 | -1.1E-13 |
| | S2 | 1.05E-05 | -1.6E-06 | 1.64E-07 | -1.2E-08 | 5.73E-10 | -1.8E-11 | 3.39E-13 | -2.8E-15 |
| L6 | S1 | -4.9E-07 | 2.67E-09 | 2.66E-09 | -2.7E-10 | 1.36E-11 | -4E-13 | 6.72E-15 | -4.8E-17 |
| | S2 | 1.3E-06 | -1.1E-07 | 6.54E-09 | -2.7E-10 | 7.57E-12 | -1.4E-13 | 1.5E-15 | -7.2E-18 |
| L7 | S1 | 1.69E-07 | -7.2E-09 | 2.21E-10 | -4.9E-12 | 7.76E-14 | -8.1E-16 | 5.13E-18 | -1.5E-20 |
| | S2 | -2.7E-08 | 1.06E-09 | -3.1E-11 | 6.47E-13 | -9.6E-15 | 9.5E-17 | -5.6E-19 | 1.51E-21 |

In Table 1C above, STO represents a stop, L1 represents a first lens element, L2 represents a second lens element, L3 represents a third lens element, L4 represents a fourth lens element, L5 represents a fifth lens element, L6 represents a sixth lens element, L7 represents a seventh lens element, S1 represents an object side surface of a lens element, S2 represents an image side surface of a lens element, and Ai represents an i^{th}-order aspheric coefficient. For example, A2 represents a 2^{nd}-order aspheric coefficient.

It can be learned from Table 1C that the first lens element L1 to the seventh lens element L7 include 14 aspherical surfaces in total. Based on the conic coefficient K and the i^{th}-order aspheric coefficient Ai provided in Table 1C, an aspherical surface type of each lens element in the first embodiment may be obtained.

In some embodiments, all even-order aspherical surface types z may be limited by using but not limited to the following aspheric formula: $z = \frac{{cr}^{2}}{1 + \sqrt{1 - {Kc}^{2} {r}^{2}}} + {\sum }_{i} {Air}^{i}$

z is a sagitta of an aspherical surface, r is a radial coordinate of an aspherical surface, c is a vertex curvature of an aspherical surface, K is a conic coefficient, and Ai represents an i^{th}-order aspheric coefficient.

FIG. 4 is a diagram of a structure of the optical lens 10 according to the first embodiment. The diagram of the structure of the optical lens 10 is a simulation image obtained by using the foregoing aspheric formula.

FIG. 5 is a diagram of a structure of the optical lens 10 according to the first embodiment. Lines are used as an example to show a light propagation path in the optical lens 10. It should be noted that the light propagation path shown in the figure is a light propagation path simulated in an ideal state, is only for reference to assist in understanding performance of the optical lens 10, and does not constitute a limitation on a light propagation path of the optical lens 10 during actual application.

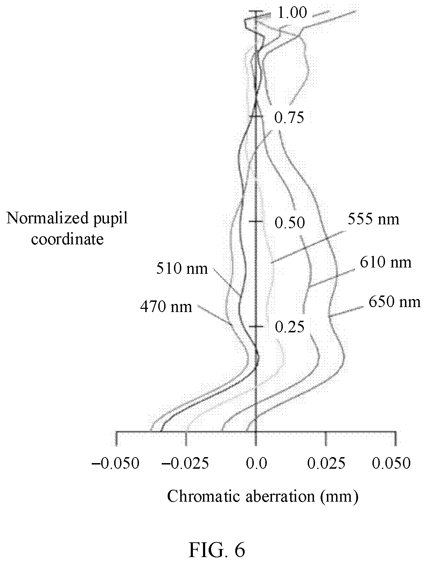

FIG. 6 is an axial chromatic aberration curve diagram of the optical lens 10 according to the first embodiment. Specifically, FIG. 6 shows axial chromatic aberration curves of light whose wavelengths are respectively 650 nm, 610 nm, 555 nm, 510 nm, and 470 nm after passing through the optical lens 10 according to the first embodiment, which may also be referred to as a spherical aberration curve. A vertical coordinate represents a normalized pupil coordinate, and a horizontal coordinate represents a chromatic aberration in an axial direction, where a unit of the chromatic aberration is millimeter. With reference to FIG. 6, an axial chromatic aberration of each wavelength in the first embodiment may be controlled within a very small range.

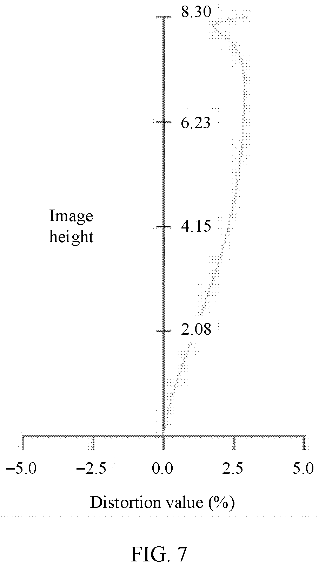

FIG. 7 is an optical distortion curve diagram of the optical lens 10 according to the first embodiment. FIG. 7 is an optical distortion curve diagram of light whose wavelength is 555 nm after passing through the optical lens 10 according to the first embodiment, indicating a difference between an actual shape and an ideal shape of the light after passing through the optical lens 10. A vertical coordinate represents an image height, and a horizontal coordinate represents a distortion value, where the distortion value is specifically a ratio (a percentage, in a unit of %) between the actual shape and the ideal shape. With reference to FIG. 7, an optical distortion of the optical lens 10 in the first embodiment can be controlled within 3%, and the optical distortion within this range is difficult to be identified with naked eyes. In other words, the optical lens 10 can obtain high-quality imaging performance.

It can be learned that, in the first embodiment, the lens elements of the optical lens 10 perform different refraction functions and cooperate with one another, so that the optical lens 10 with good imaging quality and a shorter total track length can be obtained. Specifically, the first lens element L1 has a good light converging function and a small axial thickness, the second lens element L2 can perform a light adjustment function, the third lens element L3 can perform a good light converging function, the fourth lens element L4, the fifth lens element L5, the sixth lens element L6, and the seventh lens element L6 can effectively correct a system spherical aberration, reduce a distortion of an edge field of view, and correct astigmatism, and there is a smaller gap between the sixth lens element L6 and the seventh lens element L7, so that the optical lens 10 has high imaging performance. The total track length TTL of the optical lens 10 is 11.421 mm, the total track length of the optical lens 10 is short, and small space is required for disposing the optical lens 10 on the terminal 1000, thereby facilitating thinning of the terminal 1000.

As shown in FIG. 8, in a second embodiment of this application, in a direction from an object side to an image side, a stop STO, a first lens element L1 having a positive focal power, a second lens element L2 having a negative focal power, a third lens element L3 having a negative focal power, a fourth lens element L4 having a positive focal power, a fifth lens element L5 having a negative focal power, a sixth lens element L6 having a positive focal power, a seventh lens element L7 having a negative focal power, an infrared filter IR, and an imaging plane IMA are sequentially arranged. Specific design parameters in the second embodiment are as follows. For meanings of the parameters, refer to the related descriptions in the first embodiment.

A sagitta sag at an edge of an image side surface of the third lens element L3 satisfies sag=0.46 mm.

A system focal length f of the optical lens 10 and an entrance pupil diameter EPD of the optical lens 10 satisfy f/EPD=1.52.

A curvature radius R12 of an image side surface of the sixth lens element L6 satisfies R12=-2.93.

The system focal length f of the optical lens 10, and a maximum entrance pupil diameter EPDmax and a minimum entrance pupil diameter EPDmin of the optical lens 10 satisfy f/(EPDmax-EPDmin)=2.46.

The system focal length f of the optical lens 10 and a maximum semi field of view Semi-FOV of the optical lens 10 satisfy f×tan(Semi-FOV)=8.22.

The maximum semi field of view Semi-FOV of the optical lens 10 satisfies Semi-FOV=41.2°.

A focal length f₁ of the first lens element L1 and the system focal length f of the optical lens 10 satisfy f₁/f=0.825.

A focal length f₂ of the second lens element L2 and the system focal length f of the optical lens 10 satisfy f₂/f=-1.461.

Based on the design parameters in the second embodiment, basic parameters of the optical lens 10 in the second embodiment are shown in Table 2A below.

**Table 2A: Basic parameters of the optical lens in the second embodiment**

| | |
|---|---|
| System focal length f | 9.385 mm |
| F-number F | 1.52 |
| Maximum semi field of view Semi-FOV | 41.2° |
| Maximum image height IH | 16.6 mm |
| Total track length TTL | 11.44 mm |
| Design wavelength | 650 nm, 610 nm, 555 nm, 510 nm, and 470 nm |

Based on the design parameters in the second embodiment, a curvature radius, a thickness, a refractive index, and an Abbe coefficient of each lens element of the optical lens 10 in the second embodiment are shown in Table 2B below.

**Table 2B: Curvature radius, thickness, refractive index, and Abbe coefficient of each lens element of the optical lens**

| Structure | Surface shape | Surface number | Curvature radius | Thickness | Refractive index | Abbe coefficient |
|---|---|---|---|---|---|---|
| Stop | Spherical surface | STO | inf | -0.16 | | |
| L1 | Aspherical surface | S1 | 4.4541091 | 1.296761 | 1.77684672 | 49.60352 |
| | Aspherical surface | S2 | 14.94502851 | 0.064866 | | |
| L2 | Aspherical surface | S1 | 6.623747449 | 0.355 | 1.67756948 | 19.24591 |
| | Aspherical surface | S2 | 3.78366732 | 0.480377 | | |
| L3 | Aspherical surface | S1 | 7.838969737 | 0.375559 | 1.67756948 | 19.24591 |
| | Aspherical surface | S2 | 7.6450959 | 0.88654 | | |
| L4 | Aspherical surface | S1 | 430.2606034 | 1.060706 | 1.54586938 | 56.1354 |
| | Aspherical surface | S2 | -41.627352 | 0.377492 | | |
| L5 | Aspherical surface | S1 | 11.31198023 | 0.56 | 1.67756948 | 19.24591 |
| | Aspherical surface | S2 | 10.33556745 | 0.917698 | | |
| L6 | Aspherical surface | S1 | 63.85281614 | 1.177905 | 1.54586938 | 56.1354 |
| | Aspherical surface | S2 | -2.93080402 | 0.592494 | | |
| L7 | Aspherical surface | S1 | -15.9105651 | 0.536 | 1.54586938 | 56.1354 |
| | Aspherical surface | S2 | 3.261942349 | 0.777226 | | |
| IR | Spherical surface | S1 | inf | 0.31 | 1.51827402 | 64.16641 |
| | Spherical surface | S2 | inf | 1.671146 | | |
| Imaging plane | Spherical surface | IMA | inf | 0 | | |

Based on the design parameters in the second embodiment, a conic coefficient and an aspheric coefficient of each lens element of the optical lens 10 in the second embodiment are shown in Table 2C below.

**Table 2C: Conic coefficient and aspheric coefficient of each lens element of the optical lens**

| | | Conic coefficient K | A2 | A4 | A6 | A8 | A10 | A12 | A14 |
|---|---|---|---|---|---|---|---|---|---|
| L1 | S1 | 0 | 0 | -0.00027 | 0.00074 | -0.001 | 0.000891 | -0.00055 | 0.000243 |
| | S2 | 0 | 0 | 0.002053 | 0.002058 | -0.0029 | 0.001783 | -0.00073 | 0.000212 |
| L2 | S1 | 0 | 0 | -0.00341 | 0.007076 | -0.00878 | 0.007153 | -0.00443 | 0.002066 |
| | S2 | 0 | 0 | -0.00696 | 0.001721 | 0.002494 | -0.00551 | 0.005438 | -0.00344 |
| L3 | S1 | 0 | 0 | -0.0064 | 0.000405 | 0.002968 | -0.00515 | 0.00552 | -0.00398 |
| | S2 | 0 | 0 | -0.00514 | 0.000194 | 0.001868 | -0.00224 | 0.00173 | -0.00088 |
| L4 | S1 | 0 | 0 | -0.00664 | 0.007251 | -0.01666 | 0.023036 | -0.02176 | 0.014462 |
| | S2 | 0 | 0 | -0.01483 | 0.004264 | -0.00317 | 0.002493 | -0.00188 | 0.001103 |
| L5 | S1 | -0.02649 | 0 | -0.02683 | 0.003962 | 0.000659 | -0.00132 | 0.000828 | -0.00033 |
| | S2 | -0.02747 | 0 | -0.02297 | 0.003032 | -0.00011 | -0.00017 | 9.63E-05 | -3.4E-05 |
| L6 | S1 | 39.29939 | 0 | -0.00162 | -0.00023 | -0.00043 | 0.000221 | -4.5E-05 | 4.29E-06 |
| | S2 | -1 | 0 | 0.026529 | -0.00812 | 0.002048 | -0.00045 | 9.5E-05 | -1.6E-05 |
| L7 | S1 | 0 | 0 | -0.00237 | -0.00544 | 0.001989 | -0.00037 | 4.56E-05 | -3.8E-06 |
| | S2 | -1 | 0 | -0.03435 | 0.005611 | -0.00077 | 8.69E-05 | -8E-06 | 5.84E-07 |
| | | A16 | A18 | A20 | A22 | A24 | A26 | A28 | A30 |
| L1 | S1 | -7.8E-05 | 1.81E-05 | -3.1E-06 | 3.77E-07 | -3.2E-08 | 1.82E-09 | -6.1E-11 | 9.19E-13 |
| | S2 | -4.4E-05 | 6.58E-06 | -6.8E-07 | 4.56E-08 | -1.8E-09 | 3.23E-11 | 0 | 0 |
| L2 | S1 | -0.00072 | 0.000183 | -3.4E-05 | 4.59E-06 | -4.3E-07 | 2.72E-08 | -1E-09 | 1.71E-11 |
| | S2 | 0.001514 | -0.00048 | 0.000108 | -1.8E-05 | 1.97E-06 | -1.5E-07 | 6.37E-09 | -1.2E-10 |
| L3 | S1 | 0.002015 | -0.00073 | 0.000188 | -3.5E-05 | 4.45E-06 | -3.8E-07 | 1.89E-08 | -4.3E-10 |
| | S2 | 0.000298 | -6.8E-05 | 1.06E-05 | -1.2E-06 | 1.16E-07 | -1.3E-08 | 1.08E-09 | -4.1E-11 |
| L4 | S1 | -0.0069 | 0.002394 | -0.0006 | 0.000109 | -1.4E-05 | 1.17E-06 | -5.9E-08 | 1.35E-09 |
| | S2 | -0.00047 | 0.000147 | -3.3E-05 | 5.26E-06 | -5.8E-07 | 4.21E-08 | -1.8E-09 | 3.47E-11 |
| L5 | S1 | 8.93E-05 | -1.7E-05 | 2.18E-06 | -2E-07 | 1.22E-08 | -4.9E-10 | 1.16E-11 | -1.2E-13 |
| | S2 | 8.18E-06 | -1.3E-06 | 1.49E-07 | -1.1E-08 | 5.94E-10 | -2E-11 | 4.03E-13 | -3.6E-15 |
| L6 | S1 | 6.8E-09 | -5.4E-08 | 7.22E-09 | -5.3E-10 | 2.4E-11 | -6.8E-13 | 1.09E-14 | -7.7E-17 |
| | S2 | 2.01E-06 | -1.8E-07 | 1.08E-08 | -4.6E-10 | 1.37E-11 | -2.7E-13 | 3.04E-15 | -1.6E-17 |
| L7 | S1 | 2.29E-07 | -9.9E-09 | 3.13E-10 | -7.1E-12 | 1.14E-13 | -1.2E-15 | 7.82E-18 | -2.3E-20 |
| | S2 | -3.3E-08 | 1.46E-09 | -4.8E-11 | 1.15E-12 | -2E-14 | 2.25E-16 | -1.5E-18 | 4.79E-21 |

It can be learned from Table 2C that the first lens element L1 to the seventh lens element L7 include 14 aspherical surfaces in total. Based on the conic coefficient K and the i^{th}-order aspheric coefficient Ai provided in Table 2C, an aspherical surface type of each lens element in the second embodiment may be obtained.

In some embodiments, all even-order aspherical surface types z may be limited by using but not limited to the following aspheric formula: $z = \frac{{cr}^{2}}{1 + \sqrt{1 - {Kc}^{2} {r}^{2}}} + {\sum }_{i} {Air}^{i}$

z is a sagitta of an aspherical surface, r is a radial coordinate of an aspherical surface, c is a vertex curvature of an aspherical surface, K is a conic coefficient, and Ai represents an i^{th}-order aspheric coefficient.

FIG. 8 is a diagram of a structure of the optical lens 10 according to the second embodiment. The diagram of the structure of the optical lens 10 is a simulation image obtained by using the foregoing aspheric formula.

FIG. 9 is a diagram of a structure of the optical lens 10 according to the second embodiment. Lines are used as an example to show a light propagation path in the optical lens 10. It should be noted that the light propagation path shown in the figure is a light propagation path simulated in an ideal state, is only for reference to assist in understanding performance of the optical lens 10, and does not constitute a limitation on a light propagation path of the optical lens 10 during actual application.

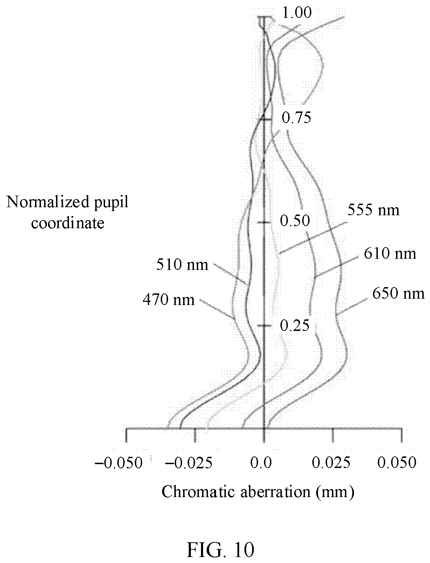

FIG. 10 is an axial chromatic aberration curve diagram of the optical lens 10 according to the second embodiment. Specifically, FIG. 10 shows axial chromatic aberration curves of light whose wavelengths are respectively 650 nm, 610 nm, 555 nm, 510 nm, and 470 nm after passing through the optical lens 10 according to the second embodiment. A vertical coordinate represents a normalized pupil coordinate, and a horizontal coordinate represents a chromatic aberration in an axial direction, where a unit of the chromatic aberration is millimeter. With reference to FIG. 10, an axial chromatic aberration of each wavelength in the second embodiment may be controlled within a very small range.

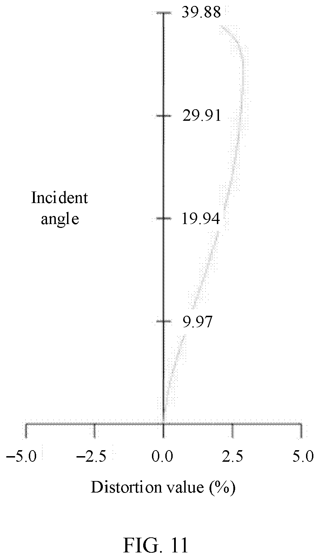

FIG. 11 is an optical distortion curve diagram of the optical lens 10 according to the second embodiment. FIG. 11 is an optical distortion curve diagram of light whose wavelength is 555 nm after passing through the optical lens 10 according to the second embodiment, indicating a difference between an actual shape and an ideal shape of the light after passing through the optical lens 10. A vertical coordinate represents an incident angle of light. It may be understood that there is a corresponding conversion relationship between the incident angle and an image height. The vertical coordinate of the optical distortion curve diagram may be designated as an incident angle or an image height. A horizontal coordinate represents a distortion value, where the distortion value is specifically a ratio (a percentage, in a unit of %) between the actual shape and the ideal shape. With reference to FIG. 11, an optical distortion of the optical lens 10 in the second embodiment can be controlled within 3%, and the optical distortion within this range is difficult to be identified with naked eyes. In other words, the optical lens 10 can obtain high-quality imaging performance.

It can be learned that, in the second embodiment, the lens elements of the optical lens 10 perform different refraction functions and cooperate with one another, so that the optical lens 10 with good imaging quality and a shorter total track length can be obtained. Specifically, the first lens element L1 has a good light converging function and a small axial thickness, the second lens element L2 can perform a light adjustment function, the third lens element L3 can perform a good light converging function, the fourth lens element L4, the fifth lens element L5, the sixth lens element L6, and the seventh lens element L6 can effectively correct a system spherical aberration, reduce a distortion of an edge field of view, and correct astigmatism, and there is a smaller gap between the sixth lens element L6 and the seventh lens element L7, so that the optical lens 10 has high imaging performance. The total track length TTL of the optical lens 10 is controlled within 11.44 mm, the total track length of the optical lens 10 is short, and small space is required for disposing the optical lens 10 on the terminal 1000, thereby facilitating thinning of the terminal 1000.

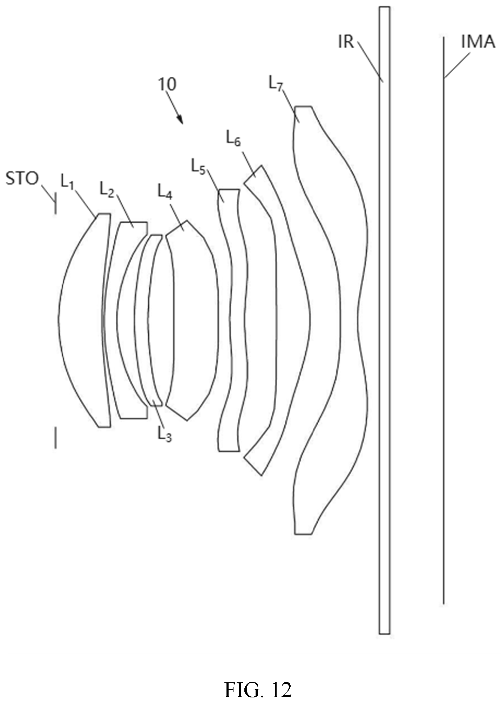

As shown in FIG. 12, in a third embodiment of this application, in a direction from an object side to an image side, a stop STO, a first lens element L1 having a positive focal power, a second lens element L2 having a negative focal power, a third lens element L3 having a positive focal power, a fourth lens element L4 having a positive focal power, a fifth lens element L5 having a negative focal power, a sixth lens element L6 having a positive focal power, a seventh lens element L7 having a negative focal power, an infrared filter IR, and a photosensitive plane IMA are sequentially arranged. Specific design parameters in the third embodiment are as follows. For meanings of the parameters, refer to the related descriptions in the first embodiment.

A sagitta sag at an edge of an image side surface of the third lens element L3 satisfies sag=0.412 mm.

A system focal length f of the optical lens 10 and an entrance pupil diameter EPD of the optical lens 10 satisfy f/EPD=1.48.

A curvature radius R12 of an image side surface of the sixth lens element L6 satisfies R12=-3.31.

The system focal length f of the optical lens 10, and a maximum entrance pupil diameter EPDmax and a minimum entrance pupil diameter EPDmin of the optical lens 10 satisfy f/(EPDmax-EPDmin)=2.35.

The system focal length f of the optical lens 10 and a maximum semi field of view Semi-FOV of the optical lens 10 satisfy f×tan(Semi-FOV)=8.08.

The maximum semi field of view Semi-FOV of the optical lens 10 satisfies Semi-FOV=41.17°.

A focal length f₁ of the first lens element L1 and the system focal length f of the optical lens 10 satisfy f₁/f=0.8345.

A focal length f₂ of the second lens element L2 and the system focal length f of the optical lens 10 satisfy f₂/f=-1.3464.

Based on the design parameters in the third embodiment, basic parameters of the optical lens 10 in the third embodiment are shown in Table 3A below.

**Table 3A: Basic parameters of the optical lens in the third embodiment**

| | |
|---|---|
| System focal length f | 9.247 mm |
| F-number F | 1.48 |
| Maximum semi field of view Semi-FOV | 41.17° |
| Maximum image height IH | 16.6 mm |
| Total track length TTL | 11.324 mm |
| Design wavelength | 650 nm, 610 nm, 555 nm, 510 nm, and 470 nm |

Based on the design parameters in the third embodiment, a curvature radius, a thickness, a refractive index, and an Abbe coefficient of each lens element of the optical lens 10 in the third embodiment are shown in Table 3B below.

**Table 3B: Curvature radius, thickness, refractive index, and Abbe coefficient of each lens element of the optical lens**

| Structure | Surface shape | Surface number | Curvature radius | Thickness | Refractive index | Abbe coefficient |
|---|---|---|---|---|---|---|
| Stop | Spherical surface | STO | inf | 0.09 | | |
| L1 | Aspherical surface | S1 | 4.488841 | 1.283815 | 1.77684672 | 49.60352 |
| | Aspherical surface | S2 | 15.63486 | 0.063 | | |
| L2 | Aspherical surface | S1 | 8.128602 | 0.37 | 1.67756948 | 19.24591 |
| | Aspherical surface | S2 | 4.063804 | 0.512834 | | |
| L3 | Aspherical surface | S1 | 7.474748 | 0.398826 | 1.668612 | 19.46 |
| | Aspherical surface | S2 | 8.059954 | 0.759228 | | |
| L4 | Aspherical surface | S1 | -27304.7 | 1.317935 | 1.54586938 | 56.1354 |
| | Aspherical surface | S2 | -36.6596 | 0.328353 | | |
| L5 | Aspherical surface | S1 | 6.675852 | 0.435 | 1.67756948 | 19.24591 |
| | Aspherical surface | S2 | 6.490446 | 0.93357 | | |
| L6 | Aspherical surface | S1 | -64.2791 | 0.982 | 1.54586938 | 56.1354 |
| | Aspherical surface | S2 | -3.31109 | 0.902461 | | |
| L7 | Aspherical surface | S1 | -20.2909 | 0.5 | 1.54586938 | 56.1354 |
| | Aspherical surface | S2 | 3.825805 | 0.638774 | | |
| IR | Spherical surface | S1 | inf | 0.31 | 1.51827402 | 64.16641 |
| | Spherical surface | S2 | inf | 1.588205 | | |
| Imaging plane | Spherical surface | IMA | inf | 0 | | |

Based on the design parameters in the third embodiment, a conic coefficient and an aspheric coefficient of each lens element of the optical lens 10 in the third embodiment are shown in Table 3C below.

**Table 3C: Conic coefficient and aspheric coefficient of each lens element of the optical lens**

| | | Conic coefficient K | A2 | A4 | A6 | A8 | A10 | A12 | A14 |
|---|---|---|---|---|---|---|---|---|---|
| L1 | S1 | 0 | 0 | - 0.000441 13 | 0.000808 967 | - 0.000880 15 | 0.000562 865 | - 0.000226 57 | 5.8525E -05 |
| | S2 | - 1.2745606 8 | 0 | 0.006184 337 | - 0.005688 6 | 0.006000 274 | - 0.005383 85 | 0.003351 465 | - 0.00145 061 |
| L2 | S1 | 0 | 0 | 0.005248 286 | - 0.005603 06 | 0.006051 814 | - 0.005588 86 | 0.003476 082 | - 0.00147 664 |
| | S2 | 0 | 0 | - 0.002213 9 | - 0.000462 78 | 0.002088 203 | - 0.002685 05 | 0.002117 613 | - 0.00119 609 |
| L3 | S1 | - 0.3954559 1 | 0 | - 0.006225 29 | 0.001241 652 | 0.000272 707 | - 0.001488 59 | 0.002158 131 | - 0.00181 112 |
| | S2 | 0 | 0 | - 0.004857 71 | - 0.003317 18 | 0.010464 922 | - 0.016416 66 | 0.016788 33 | - 0.01175 222 |
| L4 | S1 | 0 | 0 | - 0.002975 43 | 0.001097 852 | - 0.004898 82 | 0.007698 722 | - 0.007917 75 | 0.00561 6472 |
| | S2 | 0 | 0 | - 0.009170 88 | - 0.004050 39 | 0.007056 259 | - 0.006575 91 | 0.004100 128 | - 0.00182 017 |
| L5 | S1 | - 3.1352102 8 | 0 | - 0.021991 11 | - 0.003047 38 | 0.004373 677 | - 0.002511 52 | 0.001035 468 | - 0.00031 832 |
| | S2 | - 2.0642317 9 | 0 | - 0.018008 97 | - 0.002579 17 | 0.002391 156 | - 0.000939 72 | 0.000277 07 | - 6.5035E -05 |
| L6 | S1 | 96.662086 67 | 0 | 0.005206 572 | - 0.001492 92 | 6.11307E -05 | - 5.6911E-05 | 5.57816E -05 | - 1.9728E -05 |
| | S2 | - 0.78119388 | 0 | 0.020878 544 | - 0.004016 88 | 0.000859 22 | - 0.000246 04 | 6.98092E -05 | - 1.3276E -05 |
| L7 | S1 | 0.3963105 29 | 0 | - 0.003639 98 | - 0.003555 58 | 0.001133 625 | - 0.000182 82 | 1.91239E -05 | - 1.3853E -06 |
| | S2 | - 0.9570201 9 | 0 | - 0.023569 53 | 0.002117 836 | -2.803E-05 | - 2.6514E-05 | 4.64493E -06 | - 4.4638E -07 |
| | | A16 | A18 | A20 | A22 | A24 | A26 | A28 | A30 |
| L1 | S1 | -9.5472E-06 | 8.8690 6E-07 | - 2.3699E-08 | - 4.2368E-09 | 5.23124E -10 | - 2.4551E-11 | 4.38343E -13 | 0 |
| | S2 | 0.0004467 22 | - 9.9232 E-05 | 1.59319E -05 | - 1.8296E-06 | 1.46363E -07 | - 7.7381E-09 | 2.42775E -10 | - 3.4196E -12 |
| L2 | S1 | 0.0004410 17 | - 9.384E -05 | 1.41882E -05 | - 1.4953E-06 | 1.05343E -07 | - 4.5697E-09 | 1.02141E -10 | - 6.8226E -13 |
| | S2 | 0.0005172 01 | - 0.0001 7436 | 4.52744E -05 | - 8.7803E-06 | 1.21583E -06 | - 1.1253E-07 | 6.19828E -09 | - 1.5298E -10 |
| L3 | S1 | 0.0010071 05 | - 0.0003 8784 | 0.000105 063 | - 1.9967E-05 | 2.60613E -06 | - 2.2244E-07 | 1.11791E -08 | - 2.508E-10 |
| | S2 | 0.0058060 56 | - 0.0020 5544 | 0.000523 231 | -9.493E-05 | 1.19723E -05 | - 9.9705E-07 | 4.92837E -08 | - 1.0948E -09 |
| L4 | S1 | - 0.0028195 6 | 0.0010 14676 | - 0.000262 45 | 4.83589E -05 | -6.193E-06 | 5.23801E -07 | - 2.6308E-08 | 5.94307 E-10 |
| | S2 | 0.0005837 94 | - 0.0001 3582 | 2.28533E -05 | -2.747E-06 | 2.29534E -07 | - 1.2645E-08 | 4.12306E -10 | - 6.0164E -12 |
| L5 | S1 | 7.11626E-05 | - 1.1348 E-05 | 1.28038E -06 | - 1.0129E-07 | 5.49741E -09 | - 1.9519E-10 | 4.08793E -12 | - 3.8325E -14 |
| | S2 | 1.16362E-05 | - 1.5098 E-06 | 1.38273E -07 | - 8.7782E-09 | 3.76128E -10 | - 1.0324E-11 | 1.62606E -13 | - 1.103E-15 |
| L6 | S1 | 4.00149E-06 | - 5.3776 E-07 | 5.02786E -08 | - 3.2926E-09 | 1.48029E -10 | -4.346E-12 | 7.49304E -14 | - 5.7479E -16 |
| | S2 | 1.60975E-06 | - 1.2785 E-07 | 6.76764E -09 | - 2.3719E-10 | 5.28998E -12 | - 6.7948E-14 | 3.81852E -16 | 0 |
| L7 | S1 | 7.15008E-08 | - 2.6598 E-09 | 7.10657E -11 | - 1.3348E-12 | 1.67815E -14 | - 1.2708E-16 | 4.39092E -19 | 0 |
| | S2 | 2.84666E-08 | - 1.2612 E-09 | 3.90233E -11 | - 8.2695E-13 | 1.14304E -14 | - 9.2787E-17 | 3.35407E -19 | 0 |

It can be learned from Table 3C that the first lens element L1 to the seventh lens element L7 include 14 aspherical surfaces in total. Based on the conic coefficient K and the i^{th}-order aspheric coefficient Ai provided in Table 3C, an aspherical surface type of each lens element in the third embodiment may be obtained.

In some embodiments, all even-order aspherical surface types z may be limited by using but not limited to the following aspheric formula: $z = \frac{{cr}^{2}}{1 + \sqrt{1 - {Kc}^{2} {r}^{2}}} + {\sum }_{i} {Air}^{i}$

z is a sagitta of an aspherical surface, r is a radial coordinate of an aspherical surface, c is a vertex curvature of an aspherical surface, K is a conic coefficient, and Ai represents an i^{th}-order aspheric coefficient.

FIG. 12 is a diagram of a structure of the optical lens 10 according to the third embodiment. The diagram of the structure of the optical lens 10 is a simulation image obtained by using the foregoing aspheric formula.

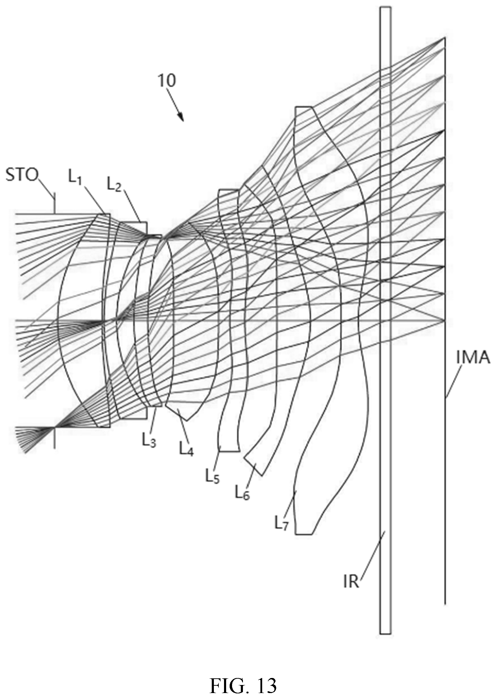

FIG. 13 is a diagram of a structure of the optical lens 10 according to the third embodiment. Lines are used as an example to show a light propagation path in the optical lens 10. It should be noted that the light propagation path shown in the figure is a light propagation path simulated in an ideal state, is only for reference to assist in understanding performance of the optical lens 10, and does not constitute a limitation on a light propagation path of the optical lens 10 during actual application.

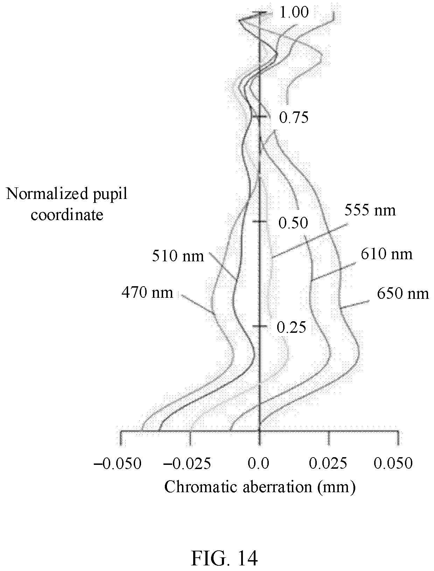

FIG. 14 is an axial chromatic aberration curve diagram of the optical lens 10 according to the third embodiment. Specifically, FIG. 14 shows axial chromatic aberration curves of light whose wavelengths are respectively 650 nm, 610 nm, 555 nm, 510 nm, and 470 nm after passing through the optical lens 10 according to the third embodiment, which may also be referred to as a spherical aberration curve. A vertical coordinate represents a normalized pupil coordinate, and a horizontal coordinate represents a chromatic aberration in an axial direction, where a unit of the chromatic aberration is millimeter. With reference to FIG. 14, an axial chromatic aberration of each wavelength in the third embodiment may be controlled within a very small range.

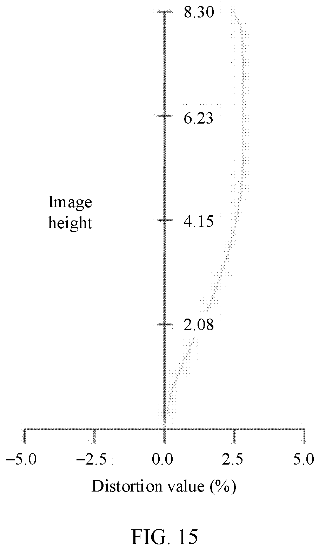

FIG. 15 is an optical distortion curve diagram of the optical lens 10 according to the third embodiment. FIG. 15 is an optical distortion curve diagram of light whose wavelength is 555 nm after passing through the optical lens 10 according to the third embodiment, indicating a difference between an actual shape and an ideal shape of the light after passing through the optical lens 10. A vertical coordinate represents an image height of light, and a horizontal coordinate represents a distortion value, where the distortion value is specifically a ratio (a percentage, in a unit of %) between the actual shape and the ideal shape. With reference to FIG. 15, an optical distortion of the optical lens 10 in the third embodiment can be controlled within 3%, and the optical distortion within this range is difficult to be identified with naked eyes. In other words, the optical lens 10 can obtain high-quality imaging performance.

It can be learned that, in the third embodiment, the lens elements of the optical lens 10 perform different refraction functions and cooperate with one another, so that the optical lens 10 with good imaging quality and a shorter total track length can be obtained. Specifically, the first lens element L1 has a good light converging function and a small axial thickness, the second lens element L2 can perform a light adjustment function, the third lens element L3 can perform a good light converging function, the fourth lens element L4, the fifth lens element L5, the sixth lens element L6, and the seventh lens element L6 can effectively correct a system spherical aberration, reduce a distortion of an edge field of view, and correct astigmatism, and there is a smaller gap between the sixth lens element L6 and the seventh lens element L7, so that the optical lens 10 has high imaging performance. The total track length TTL of the optical lens 10 is controlled within 11.324 mm, the total track length of the optical lens 10 is short, and small space is required for disposing the optical lens 10 on the terminal 1000, thereby facilitating thinning of the terminal 1000.

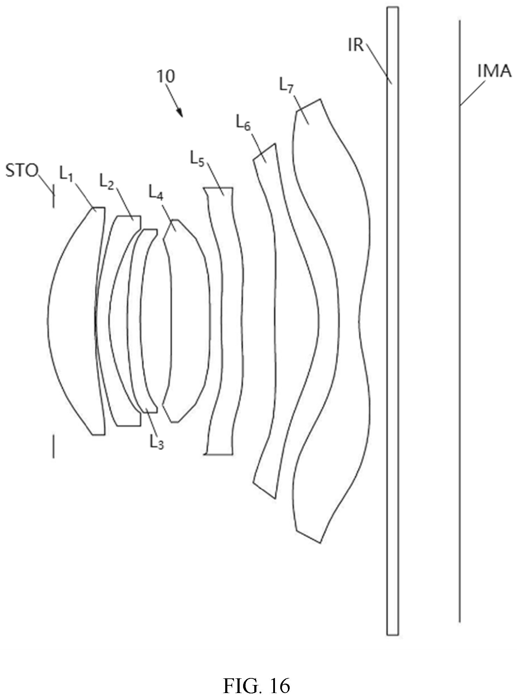

As shown in FIG. 16, in a fourth embodiment of this application, in a direction from an object side to an image side, a stop STO, a first lens element L1 having a positive focal power, a second lens element L2 having a negative focal power, a third lens element L3 having a negative focal power, a fourth lens element L4 having a positive focal power, a fifth lens element L5 having a negative focal power, a sixth lens element L6 having a positive focal power, a seventh lens element L7 having a negative focal power, an infrared filter IR, and an imaging plane IMA are sequentially arranged. Specific design parameters in the fourth embodiment are as follows. For meanings of the parameters, refer to the related descriptions in the first embodiment.

A sagitta sag at an edge of an image side surface of the third lens element L3 satisfies sag=0.462 mm.

A system focal length f of the optical lens 10 and an entrance pupil diameter EPD of the optical lens 10 satisfy f/EPD=1.485.

A curvature radius R12 of an image side surface of the sixth lens element L6 satisfies R12=-2.945.

The system focal length f of the optical lens 10, and a maximum entrance pupil diameter EPDmax and a minimum entrance pupil diameter EPDmin of the optical lens 10 satisfy f/(EPDmax-EPDmin)=2.46.

The system focal length f of the optical lens 10 and a maximum semi field of view Semi-FOV of the optical lens 10 satisfy f×tan(Semi-FOV)=8.22.

The maximum semi field of view Semi-FOV of the optical lens 10 satisfies Semi-FOV=41.2°.

A focal length f₁ of the first lens element L1 and the system focal length f of the optical lens 10 satisfy f₁/f=0.825.

A focal length f₂ of the second lens element L2 and the system focal length f of the optical lens 10 satisfy f₂/f=-1.461.

Based on the design parameters in the fourth embodiment, basic parameters of the optical lens 10 in the fourth embodiment are shown in Table 4A below.

**Table 4A: Basic parameters of the optical lens in the fourth embodiment**

| | |
|---|---|
| System focal length f | 9.325 mm |
| F-number F | 1.485 |
| Maximum semi field of view Semi-FOV | 41.3° |
| Maximum image height IH | 16.6 mm |
| Total track length TTL | 11.39 mm |
| Design wavelength | 650 nm, 610 nm, 555 nm, 510 nm, and 470 nm |

Based on the design parameters in the fourth embodiment, a curvature radius, a thickness, a refractive index, and an Abbe coefficient of each lens element of the optical lens 10 in the fourth embodiment are shown in Table 4B below.

**Table 4B: Curvature radius, thickness, refractive index, and Abbe coefficient of each lens element of the optical lens**

| Structure | Surface shape | Surface number | Curvature radius | Thickness | Refractive index | Abbe coefficient |
|---|---|---|---|---|---|---|
| Stop | Spherical surface | STO | inf | -0.16 | | |
| L1 | Aspherical surface | S1 | 4.417696831 | 1.315238 | 1.77684672 | 49.60352 |
| | Aspherical surface | S2 | 14.51200186 | 0.033734 | | |
| L2 | Aspherical surface | S1 | 6.521992542 | 0.35545 | 1.67756948 | 19.24591 |
| | Aspherical surface | S2 | 3.827584769 | 0.49412 | | |
| L3 | Aspherical surface | S1 | 9.435944618 | 0.362834 | 1.67756948 | 19.24591 |
| | Aspherical surface | S2 | 9.114454259 | 0.859713 | | |
| L4 | Aspherical surface | S1 | -150 | 1.066696 | 1.54586938 | 56.1354 |
| | Aspherical surface | S2 | -39.1052517 | 0.306263 | | |
| L5 | Aspherical surface | S1 | 9.982240756 | 0.560953 | 1.67756948 | 19.24591 |
| | Aspherical surface | S2 | 9.059994144 | 0.92722 | | |
| L6 | Aspherical surface | S1 | 34.25702027 | 1.213498 | 1.54586938 | 56.1354 |
| | Aspherical surface | S2 | -2.94520915 | 0.551527 | | |
| L7 | Aspherical surface | S1 | -12.1990057 | 0.559465 | 1.54586938 | 56.1354 |
| | Aspherical surface | S2 | 3.434958846 | 0.774047 | | |
| IR | Spherical surface | S1 | inf | 0.31 | 1.51827402 | 64.16641 |
| | Spherical surface | S2 | inf | 1.70239 | | |
| Imaging plane | Spherical surface | IMA | inf | 0 | | |

Based on the design parameters in the fourth embodiment, a conic coefficient and an aspheric coefficient of each lens element of the optical lens 10 in the fourth embodiment are shown in Table 4C below.

**Table 4C: Conic coefficient and aspheric coefficient of each lens element of the optical lens**

| | | Conic coefficient K | A2 | A4 | A6 | A8 | A10 | A12 | A14 |
|---|---|---|---|---|---|---|---|---|---|
| L1 | S1 | 0 | 0 | -0.0002 | 0.000413 | -0.00023 | -6.3E-05 | 0.000181 | -0.00013 |
| | S2 | 0 | 0 | 0.001765 | 0.002897 | -0.00358 | 0.002051 | -0.00076 | 0.0002 |
| L2 | S1 | 0 | 0 | -0.00463 | 0.008441 | -0.01026 | 0.008413 | -0.00529 | 0.002524 |
| | S2 | 0 | 0 | -0.00741 | 0.00017 | 0.00499 | -0.00847 | 0.007955 | -0.00502 |
| L3 | S1 | 0 | 0 | -0.00603 | 0.000772 | 0.001241 | -0.00272 | 0.003137 | -0.0023 |
| | S2 | 0 | 0 | -0.004 | -0.00152 | 0.005329 | -0.00721 | 0.006515 | -0.00409 |
| L4 | S1 | 0 | 0 | -0.00433 | 0.003153 | -0.01239 | 0.021703 | -0.02406 | 0.01798 |
| | S2 | 0 | 0 | -0.01325 | -0.0012 | 0.004556 | -0.00358 | 0.001022 | 0.000278 |
| L5 | S1 | 0 | 0 | -0.02825 | 0.002441 | 0.003955 | -0.00382 | 0.00196 | -0.00068 |
| | S2 | 0 | 0 | -0.02402 | 0.002346 | 0.001254 | -0.00101 | 0.000386 | -1E-04 |
| L6 | S1 | -11.3551 | 0 | -0.00129 | -0.00077 | 4.72E-05 | 5.22E-05 | -1.8E-05 | 3.04E-06 |
| | S2 | -0.86257 | 0 | 0.026418 | -0.00659 | 0.001225 | -0.00015 | 1.47E-05 | -1.3E-06 |
| L7 | S1 | 0 | 0 | -0.00338 | -0.003 | 0.000889 | -0.00013 | 1.16E-05 | -7.2E-07 |
| | S2 | -1 | 0 | -0.0333 | 0.005808 | -0.00089 | 0.000108 | -9.6E-06 | 6.22E-07 |
| | | A16 | A18 | A20 | A22 | A24 | A26 | A28 | A30 |
| L1 | S1 | 5.39E-05 | -1.5E-05 | 2.76E-06 | -3.6E-07 | 3.22E-08 | -1.9E-09 | 6.48791 E-11 | -1E-12 |
| | S2 | -3.7E-05 | 4.85E-06 | -4.3E-07 | 2.49E-08 | -8.3E-10 | 1.19E-11 | 0 | 0 |
| L2 | S1 | -0.00089 | 0.000233 | -4.4E-05 | 5.99E-06 | -5.7E-07 | 3.56E-08 | 1.3238E -09 | 2.21E-11 |
| | S2 | 0.002253 | -0.00073 | 0.000172 | -2.9E-05 | 3.43E-06 | -2.7E-07 | 1.24281E-08 | -2.6E-10 |
| L3 | S1 | 0.001157 | -0.00041 | 0.000102 | -1.8E-05 | 2.23E-06 | -1.8E-07 | 8.67571 E-09 | -1.9E-10 |
| | S2 | 0.001851 | -0.00061 | 0.000148 | -2.6E-05 | 3.28E-06 | -2.8E-07 | 1.43549 E-08 | -3.4E-10 |
| L4 | S1 | -0.00938 | 0.003486 | -0.00093 | 0.000176 | -2.3E-05 | 2.01E-06 | 1.03589 E-07 | 2.41E-09 |
| | S2 | -0.00038 | 0.000173 | -4.7E-05 | 8.37E-06 | -9.9E-07 | 7.57E-08 | -3.36006 E-09 | 6.61E-11 |
| L5 | S1 | 0.000169 | -3E-05 | 3.78E-06 | -3.4E-07 | 2.06E-08 | -8.3E-10 | 1.97997 E-11 | -2.1E-13 |
| | S2 | 1.84E-05 | -2.4E-06 | 2.28E-07 | -1.5E-08 | 6.72E-10 | -2E-11 | 3.34276 E-13 | -2.5E-15 |
| L6 | S1 | -3.1E-07 | 2.13E-08 | -9.5E-10 | 2.67E-11 | -4.3E-13 | 3.04E-15 | 0 | 0 |
| | S2 | 1.02E-07 | -6E-09 | 2.4E-10 | -6.1E-12 | 8.84E-14 | -5.6E-16 | 0 | 0 |
| L7 | S1 | 3.06E-08 | -9E-10 | 1.78E-11 | -2.3E-13 | 1.67E-15 | -5.4E-18 | 0 | 0 |
| | S2 | -2.9E-08 | 9.22E-10 | -2E-11 | 2.87E-13 | -2.4E-15 | 8.55E-18 | 0 | 0 |

It can be learned from Table 4C that the first lens element L1 to the seventh lens element L7 include 14 aspherical surfaces in total. Based on the conic coefficient K and the i^{th}-order aspheric coefficient Ai provided in Table 4C, an aspherical surface type of each lens element in the fourth embodiment may be obtained.

In some embodiments, all even-order aspherical surface types z may be limited by using but not limited to the following aspheric formula: $z = \frac{{cr}^{2}}{1 + \sqrt{1 - {Kc}^{2} {r}^{2}}} + {\sum }_{i} {Air}^{i}$

z is a sagitta of an aspherical surface, r is a radial coordinate of an aspherical surface, c is a vertex curvature of an aspherical surface, K is a conic coefficient, and Ai represents an i^{th}-order aspheric coefficient.

FIG. 16 is a diagram of a structure of the optical lens 10 according to the fourth embodiment. The diagram of the structure of the optical lens 10 is a simulation image obtained by using the foregoing aspheric formula.

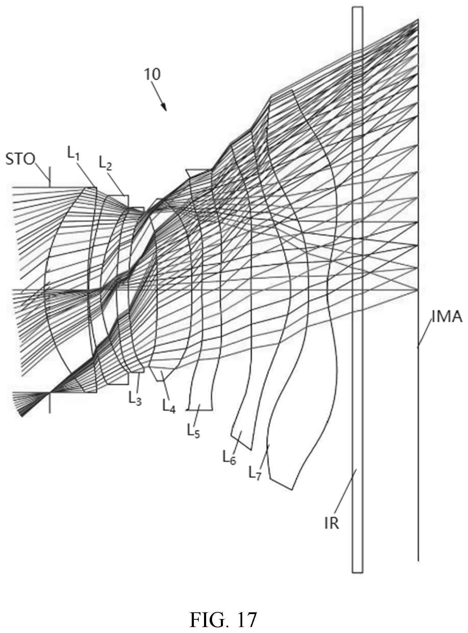

FIG. 17 is a diagram of a structure of the optical lens 10 according to the fourth embodiment. Lines are used as an example to show a light propagation path in the optical lens 10. It should be noted that the light propagation path shown in the figure is a light propagation path simulated in an ideal state, is only for reference to assist in understanding performance of the optical lens 10, and does not constitute a limitation on a light propagation path of the optical lens 10 during actual application.

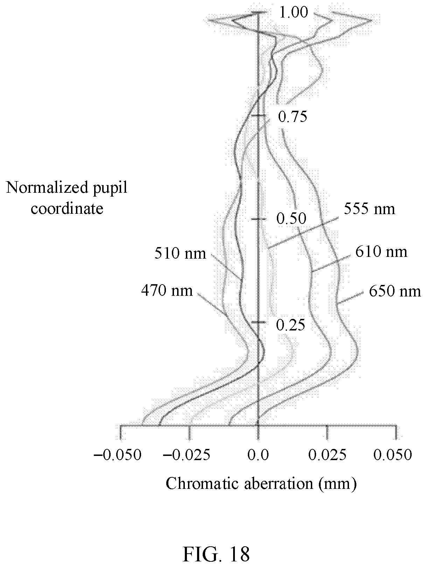

FIG. 18 is an axial chromatic aberration curve diagram of the optical lens 10 according to the fourth embodiment. Specifically, FIG. 18 shows axial chromatic aberration curves of light whose wavelengths are respectively 650 nm, 610 nm, 555 nm, 510 nm, and 470 nm after passing through the optical lens 10 according to the fourth embodiment. A vertical coordinate represents a normalized pupil coordinate, and a horizontal coordinate represents a chromatic aberration in an axial direction, where a unit of the chromatic aberration is millimeter. With reference to FIG. 18, an axial chromatic aberration of each wavelength in the fourth embodiment may be controlled within a very small range.

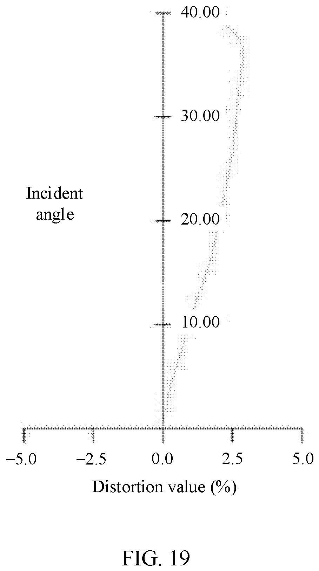

FIG. 19 is an optical distortion curve diagram of the optical lens 10 according to the fourth embodiment. FIG. 19 is an optical distortion curve diagram of light whose wavelength is 555 nm after passing through the optical lens 10 according to the fourth embodiment, indicating a difference between an actual shape and an ideal shape of the light after passing through the optical lens 10. A vertical coordinate represents an incident angle of light, and a horizontal coordinate represents a distortion value, where the distortion value is specifically a ratio (a percentage, in a unit of %) between the actual shape and the ideal shape. With reference to FIG. 19, an optical distortion of the optical lens 10 in the fourth embodiment can be controlled within 3%, and the optical distortion within this range is difficult to be identified with naked eyes. In other words, the optical lens 10 can obtain high-quality imaging performance.

It can be learned that, in the fourth embodiment, the lens elements of the optical lens 10 perform different refraction functions and cooperate with one another, so that the optical lens 10 with good imaging quality and a shorter total track length can be obtained. Specifically, the first lens element L1 has a good light converging function and a small axial thickness, the second lens element L2 can perform a light adjustment function, the third lens element L3 can perform a good light converging function, the fourth lens element L4, the fifth lens element L5, the sixth lens element L6, and the seventh lens element L6 can effectively correct a system spherical aberration, reduce a distortion of an edge field of view, and correct astigmatism, and there is a smaller gap between the sixth lens element L6 and the seventh lens element L7, so that the optical lens 10 has high imaging performance. The total track length TTL of the optical lens 10 is controlled within 11.39 mm, the total track length of the optical lens 10 is short, and small space is required for disposing the optical lens 10 on the terminal 1000, thereby facilitating thinning of the terminal 1000.

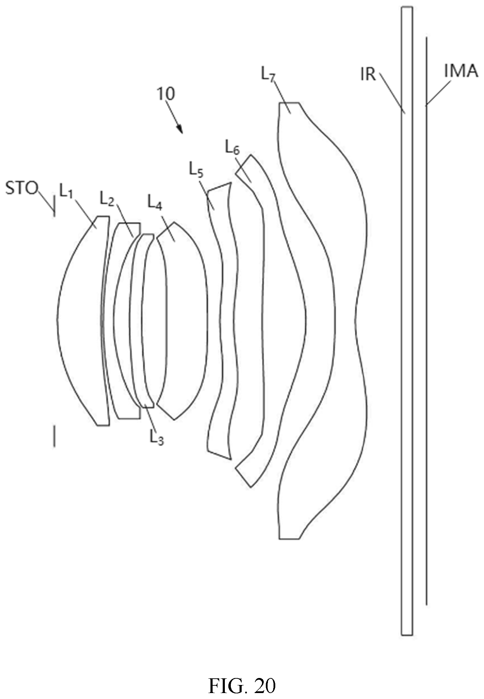

As shown in FIG. 20, in a fifth embodiment of this application, in a direction from an object side to an image side, a stop STO, a first lens element L1 having a positive focal power, a second lens element L2 having a negative focal power, a third lens element L3 having a positive focal power, a fourth lens element L4 having a positive focal power, a fifth lens element L5 having a negative focal power, a sixth lens element L6 having a positive focal power, a seventh lens element L7 having a negative focal power, an infrared filter IR, and a photosensitive plane IMA are sequentially arranged. Specific design parameters in the fourth embodiment are as follows. For meanings of the parameters, refer to the related descriptions in the first embodiment.

A sagitta sag at an edge of an image side surface of the third lens element L3 satisfies sag=0.3248 mm.

A system focal length f of the optical lens 10 and an entrance pupil diameter EPD of the optical lens 10 satisfy f/EPD=1.38.

A curvature radius R12 of an image side surface of the sixth lens element L6 satisfies R12=-3.315.

The system focal length f of the optical lens 10, and a maximum entrance pupil diameter EPDmax and a minimum entrance pupil diameter EPDmin of the optical lens 10 satisfy f/(EPDmax-EPDmin)=2.285.

The system focal length f of the optical lens 10 and a maximum semi field of view Semi-FOV of the optical lens 10 satisfy f×tan(Semi-FOV)=7.806.

The maximum semi field of view Semi-FOV of the optical lens 10 satisfies Semi-FOV=40.56°.

A focal length f₁ of the first lens element L1 and the system focal length f of the optical lens 10 satisfy f₁/f=0.837.

A focal length f₂ of the second lens element L2 and the system focal length f of the optical lens 10 satisfy f₂/f=-1.468.

Based on the design parameters in the fifth embodiment, basic parameters of the optical lens 10 in the fifth embodiment are shown in Table 5A below.

**Table 5A: Basic parameters of the optical lens in the fifth embodiment**

| | |
|---|---|
| System focal length f | 8.45 mm |
| F-number F | 1.38 |
| Maximum semi field of view Semi-FOV | 40.56° |
| Maximum image height IH | 16.6 |
| Total track length TTL | 10.82 mm |
| Design wavelength | 650 nm, 610 nm, 555 nm, 510 nm, and 470 nm |

Based on the design parameters in the fifth embodiment, a curvature radius, a thickness, a refractive index, and an Abbe coefficient of each lens element of the optical lens 10 in the fifth embodiment are shown in Table 5B below.

**Table 5B: Curvature radius, thickness, refractive index, and Abbe coefficient of each lens element of the optical lens**

| Structure | Surface shape | Surface number | Curvature radius | Thickness | Refractive index | Abbe coefficient |
|---|---|---|---|---|---|---|
| Stop | Spherical surface | STO | inf | 0.09 | | |
| L1 | Aspherical surface | S1 | 4.350666 | 1.2784658 | 1.77684672 | 49.60352 |
| | Aspherical surface | S2 | 14.026539 | 0.063 | | |
| L2 | Aspherical surface | S1 | 10.095752 | 0.3 | 1.67756948 | 19.24591 |
| | Aspherical surface | S2 | 4.8002462 | 0.4746722 | | |
| L3 | Aspherical surface | S1 | 10.208362 | 0.3611051 | 1.67756948 | 19.24591 |
| | Aspherical surface | S2 | 11.558937 | 0.7254738 | | |
| L4 | Aspherical surface | S1 | -1390.898 | 1.198584 | 1.54586938 | 56.1354 |
| | Aspherical surface | S2 | -29.0912 | 0.3647326 | | |
| L5 | Aspherical surface | S1 | 5.9988028 | 0.4004444 | 1.67756948 | 19.24591 |
| | Aspherical surface | S2 | 5.2906986 | 0.8387289 | | |
| L6 | Aspherical surface | S1 | 42.434393 | 1.2757413 | 1.54586938 | 56.1354 |
| | Aspherical surface | S2 | -3.315044 | 0.8483155 | | |
| L7 | Aspherical surface | S1 | -15.75997 | 0.5975435 | 1.54586938 | 56.1354 |
| | Aspherical surface | S2 | 3.5845579 | 1.3690752 | | |
| IR | Spherical surface | S1 | inf | 0.31 | 1.51827402 | 64.16641 |
| | Spherical surface | S2 | inf | 0.4141178 | | |
| Imaging plane | Spherical surface | IMA | inf | 0 | | |

Based on the design parameters in the fifth embodiment, a conic coefficient and an aspheric coefficient of each lens element of the optical lens 10 in the fifth embodiment are shown in Table 5C below.

**Table 5C: Conic coefficient and aspheric coefficient of each lens element of the optical lens**

| | | Conic coefficient K | A2 | A4 | A6 | A8 | A10 | A12 | A14 |
|---|---|---|---|---|---|---|---|---|---|
| L1 | S1 | 0 | 0 | -0.000532 | 0.0011638 | -0.001210 5 | 7.61E-04 | -0.000308 | 8.24E-05 |
| | S2 | -1.98877 | 0 | -0.001845 | 0.0019208 | 0.000313 9 | -0.001579 | 0.001289 02 | -0.0006 |
| L2 | S1 | 0 | 0 | -0.006458 | 0.0078784 | -0.0063626 | 0.0052136 | -0.004079 6 | 0.002451 |
| | S2 | 0 | 0 | -0.004625 | 0.0035085 | -0.002338 8 | 0.002873 9 | -0.003700 5 | 0.003156 |
| L3 | S1 | -3.1368 | 0 | -0.00647 | 0.0003185 | 0.001445 8 | -0.00265 | 0.002868 28 | -0.00208 |
| | S2 | 0 | 0 | -0.004144 | -0.005284 | 0.013629 2 | -0.020245 | 0.020344 63 | -0.01431 |
| L4 | S1 | 0 | 0 | -0.005928 | 0.011312 | -0.029511 9 | 0.044048 9 | -0.043763 2 | 0.030168 |
| | S2 | 0 | 0 | -0.009597 | 0.0024475 | -0.003927 | 0.004442 2 | -0.003414 4 | 0.001798 |
| L5 | S1 | -4.31237 | 0 | -0.024891 | 0.0022029 | 7.513E-05 | -3.96E-05 | 3.0474E-05 | -3.7E-05 |
| | S2 | -2.86067 | 0 | -0.022419 | 0.001188 | 0.000402 | -4.69E-05 | -4.182E-05 | 1.64E-05 |
| L6 | S1 | 8.895274 | 0 | 0.00139 | 0.0006757 | -1.34E-03 | 6.88E-04 | -2.10E-04 | 4.42E-05 |
| | S2 | -0.85341 | 0 | 0.017459 | -0.002503 | 3.189E-05 | 9.9E-05 | -2.78E-05 | 4.75E-06 |
| L7 | S1 | 0.124275 | 0 | -0.005409 | -0.001898 | 0.000514 2 | -6.37E-05 | 4.87E-06 | -2.23E-07 |
| | S2 | -1.0417 | 0 | -0.025902 | 0.0041131 | -0.000693 9 | 0.000102 7 | -1.17E-05 | 9.82E-07 |
| | | A16 | A18 | A20 | A22 | A24 | A26 | A28 | A30 |
| L1 | S1 | -1.47E-05 | 1.72E-06 | -1.17E-07 | 1.48E-09 | 6.24E-10 | -7.57E-11 | 4.28E-12 | -1.02E-13 |
| | S2 | 1.88E-04 | -4.08E-05 | 6.19E-06 | -6.42E-07 | 4.36E-08 | -1.74E-09 | 3.08E-11 | 0 |
| L2 | S1 | -0.00105 | 0.000317 1 | -6.80E-05 | 1.03E-05 | -1.07E-06 | 7.27E-08 | -2.92E-09 | 5.26E-11 |
| | S2 | -0.00177 | 0.000674 | -0.000179 | 3.30E-05 | -4.16E-06 | 3.42E-07 | -1.65E-08 | 3.55E-10 |
| L3 | S1 | 0.001063 | -0.000391 | 0.000104 | -1.96E-05 | 2.58E-06 | -2.24E-07 | 1.15E-08 | -2.66E-10 |
| | S2 | 0.007219 | -0.002636 1 | 0.000697 | -1.32E-04 | 1.75E-05 | -1.53E-06 | 7.97E-08 | -1.87E-09 |
| L4 | S1 | -0.01479 | 0.005227 7 | -0.001335 | 0.0002439 | -3.11E-05 | 2.63E-06 | -1.32E-07 | 3.01E-09 |
| | S2 | -0.00068 | 0.000186 | -3.75E-05 | 5.45E-06 | -5.55E-07 | 3.75E-08 | -1.51E-09 | 2.72E-11 |
| L5 | S1 | 1.6E-05 | -3.62E-06 | 4.97E-07 | -4.40E-08 | 2.54E-09 | -9.29E-11 | 1.96E-12 | -1.81E-14 |
| | S2 | -2.96E-06 | 3.42E-07 | -2.95E-08 | 2.02E-09 | -1.06E-10 | 3.83E-12 | -8.32E-14 | 8.03E-16 |
| L6 | S1 | -6.78E-06 | 7.66E-07 | -6.36E-08 | 3.82E-09 | -1.61E-10 | 4.47E-12 | -7.363E-14 | 5.41E-16 |
| | S2 | -5.69E-07 | 4.75E-08 | -2.71E-09 | 1.03E-10 | -2.50E-12 | 3.48E-14 | -2.129E-16 | 0 |
| L7 | S1 | 4.25E-09 | 1.37E-10 | -1.22E-11 | 3.95E-13 | -7.11E-15 | 6.97E-17 | -2.932E-19 | 0 |
| | S2 | -5.93E-08 | 2.56E-09 | -7.83E-11 | 1.65E-12 | -2.27E-14 | 1.83E-16 | -6.601E-19 | 0 |

It can be learned from Table 5C that the first lens element L1 to the seventh lens element L7 include 14 aspherical surfaces in total. Based on the conic coefficient K and the i^{th}-order aspheric coefficient Ai provided in Table 5C, an aspherical surface type of each lens element in the fifth embodiment may be obtained.

In some embodiments, all even-order aspherical surface types z may be limited by using but not limited to the following aspheric formula: $z = \frac{{cr}^{2}}{1 + \sqrt{1 - {Kc}^{2} {r}^{2}}} + {\sum }_{i} {Air}^{i}$

z is a sagitta of an aspherical surface, r is a radial coordinate of an aspherical surface, c is a vertex curvature of an aspherical surface, K is a conic coefficient, and Ai represents an i^{th}-order aspheric coefficient.

FIG. 20 is a diagram of a structure of the optical lens 10 according to the fifth embodiment. The diagram of the structure of the optical lens 10 is a simulation image obtained by using the foregoing aspheric formula.

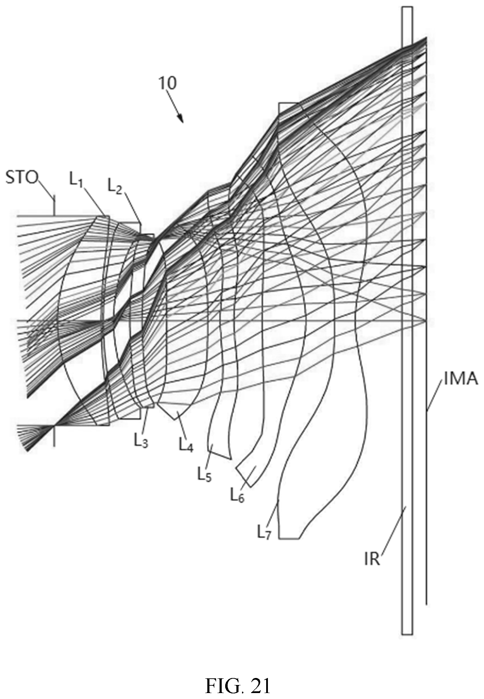

FIG. 21 is a diagram of a structure of the optical lens 10 according to the fifth embodiment. Lines are used as an example to show a light propagation path in the optical lens 10. It should be noted that the light propagation path shown in the figure is a light propagation path simulated in an ideal state, is only for reference to assist in understanding performance of the optical lens 10, and does not constitute a limitation on a light propagation path of the optical lens 10 during actual application.

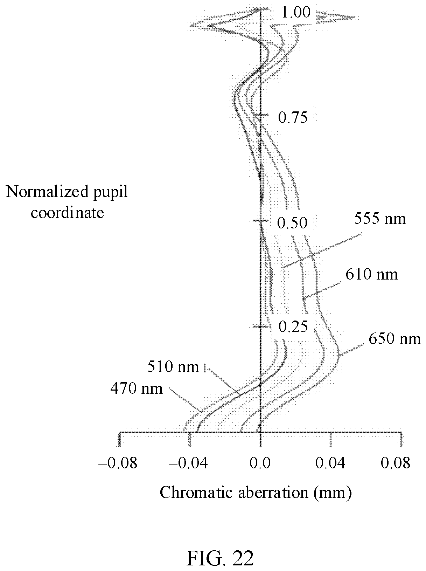

FIG. 22 is an axial chromatic aberration curve diagram of the optical lens 10 according to the fifth embodiment. Specifically, FIG. 22 shows axial chromatic aberration curves of light whose wavelengths are respectively 650 nm, 610 nm, 555 nm, 510 nm, and 470 nm after passing through the optical lens 10 according to the fifth embodiment, which may also be referred to as a spherical aberration curve. A vertical coordinate represents a normalized pupil coordinate, and a horizontal coordinate represents a chromatic aberration in an axial direction, where a unit of the chromatic aberration is millimeter. With reference to FIG. 22, an axial chromatic aberration of each wavelength in the fifth embodiment may be controlled within a very small range.

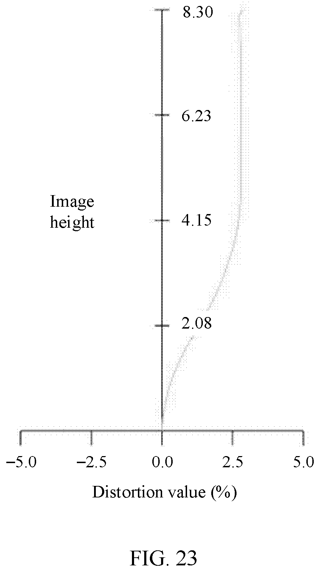

FIG. 23 is an optical distortion curve diagram of the optical lens 10 according to the fifth embodiment. FIG. 23 is an optical distortion curve diagram of light whose wavelength is 555 nm after passing through the optical lens 10 according to the fifth embodiment, indicating a difference between an actual shape and an ideal shape of the light after passing through the optical lens 10. A vertical coordinate represents an image height, and a horizontal coordinate represents a distortion value, where the distortion value is specifically a ratio (a percentage, in a unit of %) between the actual shape and the ideal shape. With reference to FIG. 23, an optical distortion of the optical lens 10 in the fifth embodiment can be controlled within 3%, and the optical distortion within this range is difficult to be identified with naked eyes. In other words, the optical lens 10 can obtain high-quality imaging performance.

It can be learned that, in the fifth embodiment, the lens elements of the optical lens 10 perform different refraction functions and cooperate with one another, so that the optical lens 10 with good imaging quality and a shorter total track length can be obtained. Specifically, the first lens element L1 has a good light converging function and a small axial thickness, the second lens element L2 can perform a light adjustment function, the third lens element L3 can perform a good light converging function, the fourth lens element L4, the fifth lens element L5, the sixth lens element L6, and the seventh lens element L6 can effectively correct a system spherical aberration, reduce a distortion of an edge field of view, and correct astigmatism, and there is a smaller gap between the sixth lens element L6 and the seventh lens element L7, so that the optical lens 10 has high imaging performance. The total track length TTL of the optical lens 10 is controlled within 10.82 mm, the total track length of the optical lens 10 is short, and small space is required for disposing the optical lens 10 on the terminal 1000, thereby facilitating thinning of the terminal 1000.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical lens (10), wherein the optical lens (10) comprises at least seven lens elements (L), each of the lens elements (L) comprises an object side surface facing an object side and an image side surface facing an image side, and the at least seven lens elements (L) comprise a first lens element (L1), a second lens element (L2), a third lens element (L3), a fourth lens element (L4), a fifth lens element (L5), a sixth lens element (L6), and a seventh lens element (L7) sequentially arranged in a direction from the object side to the image side, wherein
the first lens element (L1) has a positive focal power, a refractive index of the first lens element (L1) is greater than or equal to 1.6, a sagitta at an edge of the image side surface of the third lens element (L3) is greater than 0.3 mm, and a sagitta at an edge of the object side surface of the third lens element (L3) is greater than 0.

2. The optical lens (10) according to claim 1, wherein a back focal length BFL of the optical lens (10) and a total track length TTL of the optical lens (10) satisfy the following relationship: $4 \leq TTL / BFL \leq 7 .$

3. The optical lens (10) according to claim 1 or 2, wherein a system focal length f of the optical lens (10) and a focal length f1 of the first lens element (L1) satisfy the following relationship: $f 1 / f \leq 1 .$

4. The optical lens (10) according to any one of claims 1 to 3, wherein the system focal length f of the optical lens (10) and a focal length f2 of the second lens element (L2) satisfy the following relationship: $- 2 \leq f 2 / f \leq 0 .$

5. The optical lens (10) according to any one of claims 1 to 4, wherein the system focal length f of the optical lens (10), a maximum entrance pupil diameter EPDmax of the optical lens (10), and a minimum entrance pupil diameter EPDmin of the optical lens (10) satisfy the following relationship: $f / \left(EPDmax-EPDmin\right) \geq 1.6 .$

6. The optical lens (10) according to any one of claims 1 to 5, wherein the system focal length f of the optical lens (10) and an entrance pupil diameter EPD of the optical lens (10) satisfy the following relationship: $f / EPD \leq 1.55 .$

7. The optical lens (10) according to any one of claims 1 to 6, wherein the system focal length f of the optical lens (10) and a maximum semi field of view Semi-FOV of the optical lens (10) satisfy the following relationship: $f \times tan \left(Semi-FOV\right) \geq 7.5 mm .$

8. The optical lens (10) according to any one of claims 1 to 7, wherein the maximum semi field of view Semi-FOV of the optical lens (10) satisfies the following relationship: $Semi - FOV \leq 43 ° .$

9. The optical lens (10) according to any one of claims 1 to 8, wherein a paraxial region of the sixth lens element (L6) has a positive focal power, and a curvature radius of a center of an image side surface of the sixth lens element (L6) is less than 0.

10. The optical lens (10) according to any one of claims 1 to 9, wherein a paraxial region of the seventh lens element (L7) has a negative focal power, and a curvature radius of a center of an object side surface of the seventh lens element (L7) is less than 0.

11. The optical lens (10) according to any one of claims 1 to 10, wherein the first lens element (L1) is made of a glass material.

12. A camera module (100), comprising a photosensitive element (20) and the optical lens (10) according to any one of claims 1 to 11, wherein the photosensitive element (20) is located on an image side of the optical lens (10).

13. The camera module (100) according to claim 12, wherein the camera module (100) has a first state and a second state; in the first state, a distance between the seventh lens element (L7) of the optical lens (10) and the photosensitive element (20) is a first distance; and in the second state, a distance between the seventh lens element (L7) of the optical lens (10) and the photosensitive element (20) is a second distance, wherein
the second distance is greater than the first distance.

14. A terminal (1000), comprising an image processor (300) and the camera module (100) according to claim 12 or 13, wherein the image processor (300) is communicatively connected to the camera module (100), the camera module (100) is configured to obtain image data and input the image data into the image processor (300), and the image processor (300) is configured to process the output image data.
